# EUROPEAN PATENT APPLICATION

(11) **EP 4 607 849 A1**
(43) Date of publication of application: **27.08.2025**
(21) Application number: 23933832.0
(22) Date of filing: 22.11.2023
(51) Int. Cl.: H04L 9/40

(54) **HIERARCHICAL CHAIN-BASED DATA PROCESSING METHOD, APPARATUS, DEVICE, AND MEDIUM**

(30) Priority: 21.04.2023 CN 202310458703
(71) Applicant: Tencent Technology (Shenzhen) Company Limited, Shenzhen, Guangdong 518057 (CN)
(72) Inventor: ZHU, Gengliang, Shenzhen, Guangdong 518057 (CN)
(74) Representative: EP&C
(86) International application number: PCT/CN2023/133268
(87) International publication number: WO 2024/216966

(57) **Abstract**

Disclosed in embodiments of the present application are a hierarchical chain-based data processing method, an apparatus, a device, and a medium, applicable to the technical field of blockchains. The method comprises: when obtaining a pending block comprising N services, calling a service summary process to execute each service in the pending block, to obtain an execution result and a service execution proof of each service; calling the service summary process to perform optimization processing on a block execution result, to obtain a block optimization result and an optimization proof; on the basis of the block optimization result, a result hash of the block execution result, a service hash of the N services, the service execution proof, the optimization proof, and a block header of the pending block, obtaining a return service; and returning the return service to a local consensus node. By using the embodiments of the present application, privacy and security of sensitive data in each service can be improved.

## Description

### RELATED APPLICATION

This disclosure claims priority to Chinese Patent Application No. 2023104587038, filed with the China National Intellectual Property Administration on April 21, 2023 and entitled " DATA PROCESSING METHOD AND APPARATUS BASED ON HIERARCHICAL CHAIN, DEVICE, AND MEDIUM".

### FIELD OF THE TECHNOLOGY

This disclosure relates to the field of blockchain technologies, and in particular, to a method for processing data using a hierarchical blockchain network, an apparatus, a device, and a medium.

### BACKGROUND OF THE DISCLOSURE

In a double-layer blockchain network including a service layer and a consensus layer, a local consensus network for processing a local service may be deployed in the service layer, and a global consensus network for processing a global service may be deployed in the consensus layer. Currently, when sending a service associated with the local service to a local consensus node in the local consensus network, the service node in the service layer sends the service in a form of a plaintext. Accordingly, the local consensus node may receive plaintext data of the service to subsequently perform block packaging on the plaintext data of the service.

However, after the local consensus node writes the block packaged with the plaintext data into a local consensus sub-chain, the plaintext data written into the block on the local consensus sub-chain can still be synchronized by other service nodes on the same service layer. As a result, once the plaintext data written into the block on the local consensus sub-chain is confidential data, the confidential data on the local consensus sub-chain maintained by the local consensus network is locally public and transparent. This means that each service node that is located on the same service layer and that performs data exchange with the local consensus network can synchronize the confidential data from the local consensus sub-chain indiscriminately. Therefore, how to ensure privacy and security of the confidential data in the entire local consensus network is a technical problem that needs to be resolved.

### SUMMARY

Embodiments of this disclosure provide a method for processing data using a hierarchical blockchain network, an apparatus, a device, and a medium. A service processing node may be deployed in a hierarchical blockchain network, and a service aggregation process may be deployed in the service processing node, to process each service that carries confidential data and optimize confidential data carried in a service processing result of each service. This means that service data carried in a notification message subsequently submitted by the service processing node to a local consensus node may include an optimized service processing result. That is, in the embodiments of this disclosure, the notification message transmitted by the service processing node can improve privacy and security of confidential data.

According to one aspect of the embodiments of this disclosure, a method for processing data using a hierarchical blockchain network is provided, the hierarchical blockchain network comprising a local consensus node, a service processing node, and a plurality of service nodes, the method being executable by the service processing node and comprising:
performing aggregation processing on a block comprising N services, to obtain a service processing result for each of the N services, N being a positive integer, the N services being transmitted from the plurality of service nodes and each having a pre-set confidentiality level;
optimizing confidential data included in the service processing result of the each service, to obtain a block optimization result of the block;
generating a notification message, the notification message comprising the block optimization result and non-confidential data included in the service processing result of the each service; and
transmitting the notification message to the local consensus node to verify the block optimization result and the non-confidential data included in the service processing result of the each service, to obtain a service verification result for the each service.

According to one aspect of the embodiments of this disclosure, a method for processing data using a hierarchical blockchain network is provided, the hierarchical blockchain network comprising a local consensus node, a service processing node, and a plurality of service nodes, the method being executable by the local consensus node and comprising:
receiving a notification message from a service processing node, the notification message comprising non-confidential data included in a service processing result of each of N services and a block optimization result of a block comprising the N services, the service processing node performing aggregation processing on the block to obtain the service processing result of the each service and optimizing confidential data included in the service processing result of the each service to obtain the block optimization result, N being a positive integer, the N services being transmitted from the plurality of service nodes and each having a pre-set confidentiality level; and
verifying the non-confidential data included in the service processing result of the each service and the block optimization result, to obtain a service verification result for the each service.

According to one aspect of the embodiments of this disclosure, an apparatus for processing data using a hierarchical blockchain network is provided, the hierarchical blockchain network comprising a local consensus node, a service processing node, and a plurality of service nodes,, the apparatus running on the service processing node, and the apparatus comprising:
a processing module, configured to perform aggregation processing on a block comprising N services, to obtain a service processing result for each of the N services, N being a positive integer, the N services being transmitted from the plurality of service nodes and each having a pre-set confidentiality level;
an optimization module, configured to optimize confidential data included in the service processing result of the each service, to obtain a block optimization result of the block;
a generating module, configured to generate a notification message, the notification message comprising the block optimization result and non-confidential data included in the service processing result of the each service; and
a transmitting module, configured to transmit the notification message to the local consensus node to verify the block optimization result and the non-confidential data included in the service processing result of the each service, to obtain a service verification result for the each service.

According to one aspect of the embodiments of this disclosure, an apparatus for processing data using a hierarchical blockchain network is provided, the hierarchical blockchain network comprising a local consensus node, a service processing node, and a plurality of service nodes, the apparatus running on the local consensus node, and the apparatus comprising:
a receiving module, configured to receive a notification message from a service processing node, the notification message comprising non-confidential data included in a service processing result of each of N services and a block optimization result of a block comprising the N services, the service processing node performing aggregation processing on the block to obtain the service processing result of the each service and optimizing confidential data included in the service processing result of the each service to obtain the block optimization result, N being a positive integer, the N services being transmitted from the plurality of service nodes and each having a pre-set confidentiality level; and
a verification module, configured to verify the block optimization result and the non-confidential data included in the service processing result of the each service, to obtain a service verification result for the each service.

According to one aspect of the embodiments of this disclosure, a computer device is provided, including a memory and a processor, the memory being connected to the processor, the memory being configured to store a computer program, and the processor being configured to invoke the computer program, so that the computer device performs the method provided in the embodiments of this disclosure.

According to one aspect of the embodiments of this disclosure, a computer-readable storage medium is provided, having a computer program stored therein, the computer program being configured to be loaded and executed by a processor, so that a computer device having the processor performs the method provided in the embodiments of this disclosure.

According to one aspect of the embodiments of this disclosure, a computer program product or a computer program is provided, the computer program product or the computer program including computer instructions, the computer instructions being stored in a computer-readable storage medium, a processor of a computer device reading the computer instructions from the computer-readable storage medium, and the processor executing the computer instructions, so that the computer device performs the method provided in the embodiments of this disclosure.

In the embodiments of this disclosure, in a basic infrastructure of a hierarchical blockchain network (including a global consensus network and a local consensus network), the local consensus network may be deployed in a service layer, and the global consensus network may be deployed in a consensus layer. In addition, to ensure service privacy and security of some services (for example, confidential services) associated with the local consensus network, in the embodiments of this disclosure, a service processing node independent of a local consensus node may be deployed in the service layer of the hierarchical blockchain network. In the embodiments of this disclosure, when obtaining a block including N services, the service processing node may further process the N services in the block, to obtain a service processing result of each of the N services, including a service processing confirmation associated with each service. The service processing confirmation may be an evidence for indicating that each service is correctly processed. Then, the block processing result is optimized to obtain a block optimization result, including an optimization confirmation. Accordingly, a notification message may be generated and transmitted to the local consensus node. Therefore, the local consensus node may obtain an optimized service processing result of each service. That is, in the embodiments of this disclosure, data exchange among the global consensus node, the local consensus node, and the service processing node can ensure privacy and security of service data of a confidential service related to the local consensus node.

### BRIEF DESCRIPTION OF THE DRAWINGS

FIG. 1 is a schematic diagram of a hierarchical blockchain network according to an embodiment of this disclosure;
FIG. 2 is a schematic structural diagram of a hierarchical blockchain network according to an embodiment of this disclosure;
FIG. 3 is a schematic structural diagram of a hierarchical blockchain network provided with a service aggregation process according to an embodiment of this disclosure;
FIG. 4 is a schematic flowchart of a method for processing data using a hierarchical blockchain network according to an embodiment of this disclosure;
FIG. 5 is a schematic flowchart of obtaining a notification message according to an embodiment of this disclosure;
FIG. 6 is a schematic flowchart of a method for processing data using a hierarchical blockchain network according to an embodiment of this disclosure;
FIG. 7 is a schematic interaction diagram of a method for processing data using a hierarchical blockchain network according to an embodiment of this disclosure;
FIG. 8 is a schematic interaction diagram of a method for processing data using a hierarchical blockchain network according to an embodiment of this disclosure;
FIG. 9 is a schematic flowchart of a method in a hierarchical blockchain network according to an embodiment of this disclosure;
FIG. 10 is a first schematic structural diagram of an apparatus for processing data using a hierarchical blockchain network according to an embodiment of this disclosure;
FIG. 11 is a second schematic structural diagram of an apparatus for processing data using a hierarchical blockchain network according to an embodiment of this disclosure; and
FIG. 12 is a schematic structural diagram of a computer device according to an embodiment of this disclosure.

### DESCRIPTION OF EMBODIMENTS

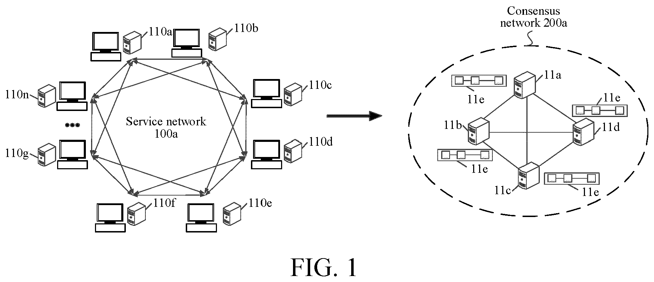

FIG. 1 is a schematic diagram of a hierarchical blockchain network according to an embodiment of this disclosure. The hierarchical blockchain network can be applied to a blockchain electronic billing system. A blockchain network corresponding to this blockchain electronic billing system may include a service network deployed in a public network and a consensus network (also known as a witness network) deployed in private cloud. The service network may be a service network 100a shown in FIG. 1, and the consensus network may be a consensus network 200a shown in FIG. 1. The structure of the hierarchical blockchain network is specifically a hierarchical structure including a service layer and a consensus layer. In the blockchain network, to implement network isolation between the service network and the consensus network, in the embodiments of this disclosure, the service network may be deployed in the service layer of the hierarchical structure, and the consensus network may be deployed in the consensus layer of the hierarchical structure.

A plurality of service nodes may be deployed in the service network 100a shown in FIG. 1. The plurality of service nodes may specifically include a service node 110a, a service node 110b, a service node 110c, a service node 110d, a service node 110e, a service node 110f, a service node 110g, ..., and a service node 110n shown in FIG. 1. A quantity of service nodes deployed in the service network 100a is not limited herein. As shown in FIG. 1, each service node running in the service network 100a may exchange data with the consensus node in the consensus network.

For example, in the structure of the hierarchical blockchain network, a service node may submit a service (for example, an electronic bill issuance service) to the consensus node in the consensus network in a form of a service. Accordingly, after the consensus node packages the service (for example, the electronic bill issuance service) into a block, and links the block including the service to the blockchain maintained by the consensus network, the consensus node may authorize the service node to synchronize the service (for example, the electronic bill issuance service) related to the service node on the blockchain maintained by the consensus network. In addition, when the service node synchronizes the service related to the service node on the blockchain, the service node may further synchronize service data of the service. For example, the service data may be specifically an electronic bill issued by the consensus node for the electronic bill issuance service.

A plurality of consensus nodes are deployed in the consensus network 200a shown in FIG. 1. The plurality of consensus nodes may specifically include a consensus node 11a, a consensus node 11b, a consensus node 11c, and a consensus node 11d shown in FIG. 1. A quantity of consensus nodes deployed in the consensus network 200a is not limited herein. In addition, as shown in FIG. 1, for the plurality of consensus nodes running in the consensus network 200a, a blockchain that is jointly maintained is specifically a blockchain 11e shown in FIG. 1.

In the blockchain electronic billing system, the service network and the consensus network can also interact through routing boundaries. As the consensus network is located in relatively secure private cloud and there is already a consensus mechanism to ensure security of accessing each other, additional identity management and network control are not required. However, the service node is located in a public network and may be accessed by other uncertain network terminals. Therefore, behaviors of the service node and other possible nodes accessing the consensus network need to be strictly controlled.

The blockchain (for example, the global consensus chain and the local consensus sub-chain) in the embodiments of this disclosure is a new application mode of a computer technology such as distributed data storage, point-to-point transmission, a consensus mechanism, and an encryption algorithm, and is mainly configured to sort data in chronological order and encrypt the data into a ledger, so that the data cannot be tampered with or forged, and the data can be verified, stored, and updated. The blockchain is essentially a decentralized database. Every node in the database stores the same blockchain.

In the blockchain electronic billing system, the consensus node may be responsible for reaching consensus in the consensus network (for example, the consensus network 200a) where the blockchain (for example, the blockchain 11e) is located. For the consensus network 200a, a specific process in which the consensus node writes, into a corresponding blockchain ledger (for example, a distributed database), a service (for example, the electronic bill issuance service) submitted to the consensus network 200a may be: A user client sends a service (for example, the electronic bill issuance service) to a service node. Then, the service (for example, the electronic bill issuance service) is successively transferred between service nodes in a service network in the blockchain network, until a consensus node deployed in the consensus network 200a in the blockchain network (for example, the consensus node 11b in the consensus network 200a) receives the service (for example, the electronic bill issuance service). In this case, the consensus node (for example, the consensus node 11b in the consensus network 200a) further packages the service (for example, the electronic bill issuance service) into a block, to facilitate subsequent consensus with another consensus node on the currently packaged block, and after the consensus is reached on the block, the consensus node may write the block on which consensus is reached into a distributed database of the consensus network (for example, the consensus network 200a) of the consensus node.

In the blockchain electronic billing system, a smart contract may be deployed on the blockchain 11e of the consensus network 200a. The smart contract in the blockchain electronic billing system may be understood as a code that can be understood and processed by consensus nodes, and any logic may be processed to obtain a result through the smart contract. For example, if a user needs to process a service, a user client may initiate a service processing request for the service, to access and invoke a smart contract already deployed on a blockchain (for example, the blockchain 11e) maintained by the consensus network (for example, the consensus network 200a).

Specifically, the service node in the service network may send the service processing request to a consensus node (for example, the consensus node 11a shown in FIG. 1) in the consensus network 200a, to perform, through a chain entrance of the consensus network 200a, identity authentication on the user sending the service processing request, and when the identity authentication succeeds, the service processing request sent by the user is allowed to be sent to another consensus node (for example, the consensus node 11b shown in FIG. 1) in the consensus network 200a. Then, a smart contract can be run in the consensus node (for example, the consensus node 11a and the consensus node 11b shown in FIG. 1) to process the service requested by the user.

One or more smart contracts (the smart contract is essentially executable service processing data) may be deployed on the blockchain (for example, the blockchain 11e) maintained by the consensus network (for example, the consensus network 200a). The smart contracts may be distinguished through contract invoking addresses, contract identities (ID), or contract names. Moreover, the service processing request initiated by the user client may also carry a contract invoking address, a contract identity, or a contract name of a smart contract, to specify the smart contract that needs to be run.

In the blockchain electronic billing system, a peer-to-peer (P2P) network may be formed between any two blockchain nodes in the consensus network (for example, the consensus network 200a). The peer-to-peer network may use a P2P protocol. The P2P protocol is an application layer protocol that is run based on the transmission control protocol (TCP). Any device, such as a server or a terminal, may be added to a distributed system to become a blockchain node. Each blockchain node may include a hardware layer, an intermediate layer, an operating system layer, and an application layer.

In addition, in the blockchain electronic billing system, to ensure service privacy, isolation, and security of electronic bill derived services associated with service nodes deployed in different regions (for example, provinces) in the service network, in the embodiments of this disclosure, different consensus networks may be respectively deployed in the service layer of the service network for the service nodes of the different regions (for example, provinces) by using a region (for example, provinces) as a unit, and then, the electronic bill derived services of the different regions (for example, provinces) may be respectively processed by the consensus nodes in the different consensus networks deployed in the service layer. For example, in the service layer, one region (for example, one province) may correspond to one consensus network. For ease of understanding, in the embodiments of this disclosure, an example of one consensus network deployed in the service layer is used. Therefore, consensus networks deployed in the service layer are collectively referred to as local consensus networks, and consensus networks deployed in the consensus layer are collectively referred to as global consensus networks. Further, a consensus node in the local consensus network may be referred to as a local consensus node, and a consensus node in the global consensus network may be referred to as a global consensus node. On this basis, in the embodiments of this disclosure, a blockchain maintained by a local consensus node in the local consensus network may be referred to as a local consensus sub-chain, and a blockchain maintained by a global consensus node in the global consensus network may be referred to as a global consensus chain. Blockchains (for example, the global consensus chain and the local consensus sub-chain) in the hierarchical structure may be collectively referred to as hierarchical chains.

The global consensus node in the global consensus network may be configured to perform global services (that is, bill services whose service attributes are global, such as an electronic bill issuance service, an electronic bill transfer service, and an electronic bill reimbursement service) associated with the electronic bill, and the local consensus node in the local consensus network may be configured to perform local services (that is, other bill services whose service attributes are local, for example, some electronic bill derived services associated with the electronic bill, such as a credibility query service and an invoice correction service for an issued electronic invoice) associated with the electronic bill.

Further, based on the structure of the hierarchical blockchain network, an embodiment of this disclosure further provides an improved hierarchical blockchain network. The improved hierarchical blockchain network includes a local consensus network deployed in a service layer and a global consensus network deployed in a consensus layer. The global consensus network is independent of the local consensus network. In some embodiments of this disclosure, blockchains maintained by the local consensus network deployed in the service layer may be collectively referred to as a local consensus sub-chain, and blockchains maintained by the global consensus network deployed in the consensus layer may be collectively referred to as a global consensus chain. In some embodiments of this disclosure, consensus nodes in the local consensus network may be collectively referred to as a local consensus node, and consensus nodes in the global consensus network may be collectively referred to as a global consensus node.

In some embodiments of this disclosure, in the service network 100a in the hierarchical structure, a region may be used as a division unit, and networks used for processing corresponding regional services are configured or deployed for all regions. These configured or deployed networks used for processing corresponding regional services are local consensus networks, and consensus nodes in these local consensus networks are all located in the service network 100a. Accordingly, a blockchain network corresponding to the improved hierarchical structure may be constructed by using these local consensus networks configured in the service layer and the global consensus network configured in the consensus layer.

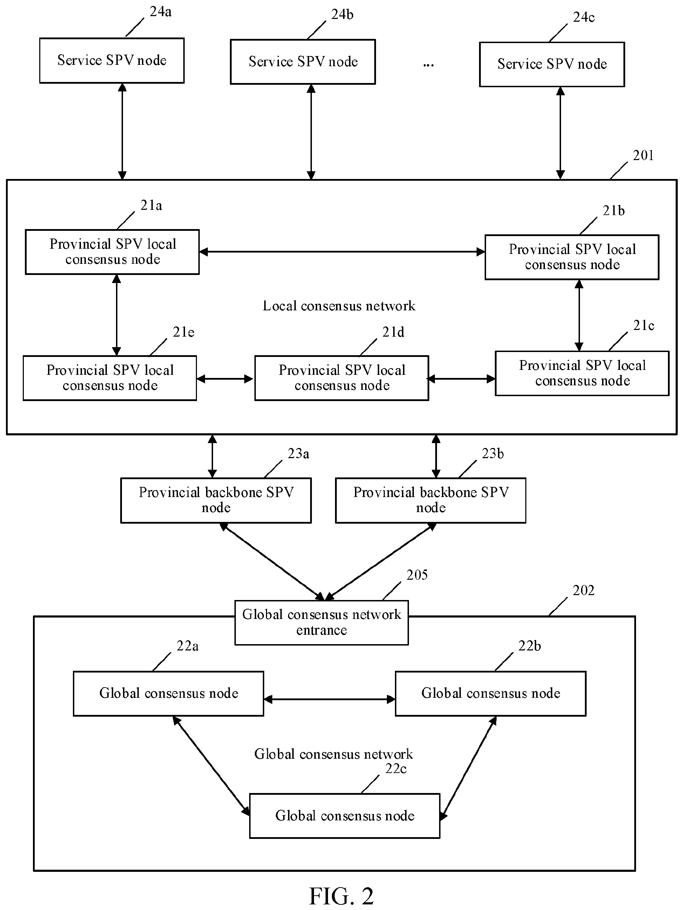

The consensus node in the local consensus network deployed in the service layer is essentially a service node (that is, an SPV node) on which a local consensus protocol runs. For example, for ease of understanding, an example of a province as the division unit is used herein. A local consensus network 201 shown in FIG. 2 may be configured for a province. Local consensus nodes in the local consensus network are provincial SPV nodes on which the local consensus protocol runs. The provincial SPV nodes on which the local consensus protocol runs may be collectively referred to as a provincial SPV local consensus node, and blockchains maintained by the provincial SPV local consensus nodes are local consensus sub-chains.

A local consensus network is a network used for processing regional services. The consensus network 200a in the hierarchical structure may be a global consensus network 202 shown in FIG. 2. A blockchain maintained by a consensus node in the global consensus network 202 is the global consensus chain. The global consensus chain may also be referred to as a global chain, a global consensus main chain, or the like.

In some embodiments of this disclosure, if a global consensus network used for processing a global service is already deployed in the consensus layer, one or more networks used for processing regional services are further deployed in the service layer by using the service node in the service network 100a. In some embodiments of this disclosure, the one or more networks used for processing regional services deployed in the service layer may be referred to as local consensus networks under the global consensus network, that is, a quantity of local consensus networks under the global consensus network may be one or more. When one local consensus network is used for maintaining one local consensus sub-chain, a quantity of local consensus sub-chains maintained by the local consensus network deployed in the service layer may also be one or more. The local consensus network under the global consensus network is used to describe that a service processing level of the global consensus network deployed in the consensus layer is higher than a service processing level of the local consensus network deployed in the service layer. Therefore, a local consensus network having a lower service processing level may be referred to as a local consensus network under the global consensus network.

One local consensus network may be used for processing a service submitted by a service node in one region. Therefore, when a plurality of local consensus networks are deployed in the service layer, different local consensus networks may be used for processing services submitted by service nodes in different regions. However, in the improved hierarchical structure, the global consensus network not only may be used for processing some global services, but also may be used for processing an aggregated service submitted by a local consensus node in each local consensus network after some regional services on the local consensus sub-chain are aggregated. A blockchain network corresponding to the improved hierarchical structure is a hierarchical blockchain network, and a hierarchical chain maintained by the hierarchical blockchain network may specifically include the local consensus sub-chain and global consensus chain.

In the hierarchical chain maintained by the hierarchical blockchain network, services associated with service nodes in different regions may be stored on different local consensus sub-chains by local consensus nodes in local consensus networks in corresponding regions. For example, in the blockchain electronic billing system, a global service processed by the global consensus node in the global consensus network may be specifically a bill service in a global region whose service attribute is global, and a local service processed by the local consensus node in the local consensus network may be specifically another bill service whose service attribute is local in each region under the global region.

In some embodiments of this disclosure, a local consensus network may be deployed for each region under the global region (for example, a plurality of provincial or ministerial regions under the global region). Each local consensus network may be configured to perform data exchange with a service node (for example, a service SPV node in the provincial or ministerial region shown in FIG. 2) in the corresponding region, to implement service processing in the corresponding region. For example, when being configured to process a local service in a corresponding region, the local consensus node in each local consensus network may be specifically configured to process a credibility query service, an invoice correction service, and the like in the corresponding region. Based on this, the local consensus network used for performing service processing on a service in the provincial or ministerial region may also be referred to as a provincial local consensus network, and a local consensus sub-chain maintained by the provincial local consensus network may be referred to as a provincial local consensus sub-chain.

By analogy, the provincial local consensus network may further be subdivided into more fine-grained regional local consensus networks. For example, a local consensus network in a subdivided region (for example, a district region under the provincial or ministerial region) may be deployed under the provincial local consensus network. Then, a local consensus network corresponding to the district region under the provincial or ministerial region may be referred to as a district local consensus network. Each district local consensus network is configured to maintain a corresponding district local consensus sub-chain. Each district local consensus network may be configured to perform data exchange with a service node in a district region, to implement service processing (for example, bill service processing) in the district region.

For ease of understanding, refer to FIG. 2. FIG. 2 is a schematic structural diagram of a hierarchical blockchain network according to an embodiment of this disclosure. As shown in FIG. 2, the hierarchical blockchain network may include a local consensus network 201 and a global consensus network 202. The local consensus network 201 may be configured to maintain a local consensus sub-chain and perform service processing on a service (for example, a local service, where the local service may be specifically the regional service) submitted by a service node in a corresponding region. That is, the local consensus network 201 is a network deployed in the service layer and configured to process the regional service in the corresponding region, for example, the provincial local consensus network configured to process a service in the provincial or ministerial region, and the provincial local consensus network may be deployed by a provincial organization in the blockchain electronic billing system. When the local consensus network shown in FIG. 2 is a provincial local consensus network, each consensus node in the provincial local consensus network is a local consensus node. The local consensus node may be specifically a provincial SPV local consensus node. For example, each provincial SPV local consensus node may include but is limited to a provincial SPV local consensus node 21a, a provincial SPV local consensus node 21b, ..., and a provincial SPV local consensus node 21e shown in FIG. 2.

In the hierarchical blockchain network, one or more local consensus networks may be deployed under the global consensus network, to process services in corresponding regions. For ease of understanding, an example of the local consensus network 201 shown in FIG. 2 as the local consensus network deployed under the global consensus network is used for description herein. For a local consensus network corresponding to another region, refer to related descriptions of the local consensus network 201, and details are not described herein again.

The global consensus network 202 shown in FIG. 2 may be configured to maintain a global consensus chain in a hierarchical chain, and may perform service processing on a global service submitted by a service node in a service network, for example, may perform service processing on a bill service in a global region whose service attribute is global. As shown in FIG. 2, each consensus node in the global consensus network 202 is a global consensus node, and the global consensus node may include but is not limited to a global consensus node 22a, a global consensus node 22b, and a global consensus node 22c shown in FIG. 2.

When the local consensus sub-chain is deployed in the local consensus network 201, the local consensus sub-chain subsequently maintained by the local consensus network 201 needs to be registered in advance on the global consensus chain maintained by the global consensus network 202, so that the local consensus sub-chain may be run in the local consensus network 201 when sub-chain registration succeeds.

A specific process of registering the local consensus sub-chain on the global consensus chain may be described as: A service object may send a registration request and a configuration request for the local consensus sub-chain to the global consensus node, so that the global consensus node may activate the local consensus network, configure a chain identification for the local consensus sub-chain and configure genesis information for a genesis block in the local consensus sub-chain, and may use the configured chain identification and genesis information of the local consensus sub-chain as configuration information of the local consensus sub-chain. Accordingly, after obtaining the configuration information, the local consensus node may create the genesis block in the local consensus sub-chain based on the genesis information, to start the local consensus sub-chain, thereby completing creation of the local consensus network and the local consensus sub-chain.

The local consensus node in the local consensus network may synchronize, from the global consensus chain, a target consensus block into which the registration request is written. The registration request is submitted by a service object to the global consensus node by using a service node and is used for requesting registration of the local consensus sub-chain. The registration request is submitted by a service object to the global consensus node by using a service node and is used for requesting configuration of the genesis block of the local consensus sub-chain.

The target consensus block further includes the configuration request corresponding to the registration request, and the configuration request carries the chain identification (for example, the chain identification of the local consensus sub-chain is L1) configured by the global consensus node for the local consensus sub-chain and the genesis information configured by the global consensus node for the genesis block on the local consensus sub-chain. Then, the local consensus node may obtain the genesis information of the genesis block to be created on the local consensus sub-chain, then after verification on the genesis information succeeds, create, in the local consensus network by using the genesis information, the genesis block, and start the local consensus sub-chain based on the genesis block. The genesis block is the first block that is written into the local consensus sub-chain by the local consensus node in the local consensus network after the local consensus sub-chain is started.

When starting the local consensus sub-chain in the local consensus network for the first time, it needs to be verified whether genesis information in the genesis block created in the local consensus network is consistent with genesis information of the local consensus sub-chain (for example, the local consensus sub-chain whose chain identification is L1) registered with the global consensus chain, and the local consensus sub-chain is started when it is verified that the genesis information in the genesis block created in the local consensus network is consistent with the genesis information of the local consensus sub-chain registered with the global consensus chain.

In some embodiments of this disclosure, when a district local consensus network is deployed under a provincial local consensus network, another local consensus sub-chain for processing a subdivided service may also be registered on a local consensus sub-chain maintained by the provincial local consensus network.

Data exchange may be performed between the local consensus network 201 and the global consensus network 202, so that a secure and efficient service flow system may be constructed while the local consensus network 201 and the global consensus network 202 cooperate with each other. The blockchain electronic billing system using the improved hierarchical structure not only can facilitate hierarchical implementation of service governance of various services related to an electronic bill, but also can ensure that various regions independently run services in these regions. Besides, traffic of an entire service union does not need to be gathered to the global consensus chain. This can implement data isolation, service privacy isolation, and compliance for services in different regions, and can ensure that the global consensus network does not need to carry a large quantity of subdivided services and therefore can be more focused on global governance of global services (for example, an electronic bill issuance service related to an electronic bill).

The local consensus node in the local consensus network may essentially be a lightweight node (that is, the simplified payment verification (SPV) node) in the service network. That is, a local consensus node in the local consensus network 201 may synchronize from a global consensus chain maintained by the global consensus network 202, service data of a global service associated with the local consensus node (for example, the local consensus network 201), and does not need to synchronize all block data in the global consensus chain and instead needs to maintain all block data in the local consensus sub-chain. Therefore, when the local consensus network is a provincial local consensus network, a local consensus node in the provincial local consensus network may also be referred to as a provincial SPV local consensus node.

The provincial local consensus network may synchronize service data of a global service related to the provincial local consensus network from the global consensus chain by using the provincial main chain SPV node. In some embodiments of this disclosure, when processing a local service, the local consensus network may cite service data of a global service synchronized from the global consensus chain. The service data of the global service may be specifically a read key-value set in service status data of a smart contract (that is, the service processing data) used by the global consensus node when processing the global service in a block. For example, when obtaining an electronic bill related to a service node from the global consensus chain, the service node corresponding to a service object may further submit a prize drawing service for the electronic bill to the local consensus node in the local consensus network. In this case, the local consensus node may determine, from other data synchronized from the global consensus chain and associated with prize drawing of the electronic bill, related data needed to perform the prize drawing service, for example, data such as a list of enterprises participating in prize drawing and a ratio of participating in prize drawing, and then perform the prize drawing service based on the related data.

A service submitted to the local consensus network 201 is not forwarded to the global consensus network, and instead only needs to be locally packaged in the local consensus network to obtain a block for consensus, and the block on which consensus is reached is linked to the local consensus sub-chain. In an embodiment, if required, information aggregation may be performed on block information in blocks on the local consensus sub-chain maintained by the local consensus network, so that aggregation information obtained through aggregation may be uploaded to the global consensus network in a service (that is, a global service) form. For example, after receiving a prize drawing service (the prize drawing service is a local service) submitted by a service node in a corresponding region, a local consensus node (21a shown in FIG. 2) in the local consensus network 201 may not directly forward each received prize drawing service to the global consensus network, and instead autonomously process the prize drawing service in the local consensus network 201, and link a prize drawing result obtained after prize drawing services are processed to the local consensus sub-chain. Then, after completing prize drawing services in a cycle, the local consensus node (21a shown in FIG. 2) in the local consensus network 201 may obtain prize drawing results in the cycle from block information of a block in the local consensus sub-chain, and aggregate prize drawing results in the cycle, for example, aggregate information such as an accumulated quantity of times each prize is won in the cycle. Then, the local consensus node may encapsulate aggregation information obtained through aggregation into an aggregation service, and may submit the aggregation service to the global consensus node in the global consensus network 202 in a form of a service.

In the blockchain electronic billing system corresponding to the hierarchical blockchain network, a service node (an SPV node) configured to perform data exchange between the local consensus network 201 and the global consensus network 202 is referred to as a provincial main chain SPV node. As shown in FIG. 2, a plurality of provincial main chain SPV nodes may perform data exchange between the local consensus network 201 and the global consensus network 202. In this case, the plurality of provincial main chain SPV nodes may specifically include, but are not limited to, a provincial main chain SPV node 23a and a provincial main chain SPV node 23b shown in FIG. 2. Roles, data, and permissions of the provincial main chain SPV nodes configured to perform data exchange between the local consensus network 201 and the global consensus network 202 are completely the same.

As shown in FIG. 2, 2 provincial main chain SPV nodes configured to perform data exchange between a global consensus network and a local consensus network may represent service active-active. For example, any one of the 2 provincial main chain SPV nodes may synchronize ledger data of the global consensus chain maintained by the global consensus network 202 to the local consensus node in the local consensus network, so that the local consensus node may perform service processing of other local services (for example, the prize drawing service and the credibility query service) based on the ledger data of the global consensus chain.

The provincial main chain SPV node is essentially a service node in the service network that is configured to perform ledger synchronization with the global consensus network. Therefore, in one or more implementations, the provincial main chain SPV node may be further configured to receive a global service (for example, an archive configuration request for archiving local consensus data on the local consensus sub-chain) submitted by each service object by using a user client.

Specifically, when a service object needs to archive the local consensus sub-chain, the service object may submit the global service (for example, the archive configuration request for archiving local consensus data on the local consensus sub-chain) to the provincial main chain SPV node, then the provincial main chain SPV node may forward the received global service (for example, the archive configuration request for archiving local consensus data on the local consensus sub-chain) to a network entrance (for example, a global consensus network entrance 205 shown in FIG. 2) of the global consensus network, and then the global consensus network entrance 205 may forward the received global service to the global consensus node, for example, the global consensus node 22a, the global consensus node 22b, and the global consensus node 22c in FIG. 2.

**In** an embodiment, in one or more implementations, the provincial main chain SPV node may further receive a global service (for example, the aggregation service) sent by the local consensus node, and may forward, to the global consensus network entrance 205, the global service (for example, the aggregation service) sent by the local consensus node. For example, the local consensus node may aggregate service data of a service of a service type on the local consensus sub-chain, generate the aggregation service, and then send the aggregation service to the provincial main chain SPV node. In this case, when receiving the aggregation service sent by the local consensus node (for example, the provincial SPV local consensus node 21a), the provincial main chain SPV node may further forward the aggregation service to the global consensus network entrance 205, then the global consensus network entrance 205 may forward the received aggregation service to the global consensus nodes in the global consensus network, and then these global consensus nodes may subsequently link the aggregation service to the global consensus chain.

The service nodes in the hierarchical blockchain network may include the service node (for example, the provincial main chain SPV node) configured to synchronize ledger data of the global consensus chain, and may further include service nodes configured to synchronize ledger data of the local consensus sub-chain. These service nodes configured to synchronize the ledger data of the local consensus sub-chain may be service SPV nodes. In some embodiments of this disclosure, the service SPV node performing data exchange with the local consensus network is mainly responsible for submitting a local transaction to the local consensus network and synchronizing ledger data of each block on the local consensus sub-chain. For example, the service SPV node may include, but is not limited to, a service SPV node 24a, a service SPV node 24b, and a service SPV node 24c shown in FIG. 2.

In some embodiments of this disclosure, service nodes (for example, the provincial main chain SPV nodes) configured to synchronize ledger data of the global consensus chain may be collectively referred to as a global service node. The global service node may specifically include, but is not limited to, a cross-chain relay that performs data exchange between the local consensus network and the global consensus network. That is, the cross-chain relay is essentially an SPV node deployed in a service layer. In some embodiments of this disclosure, service nodes (for example, the service SPV nodes) configured to synchronize ledger data of the local consensus sub-chain may be collectively referred to as a local service node. A service submitted by the global service node to the global consensus node is the global service, and a service submitted by the local service nodes to the local consensus node is the local service. In some embodiments of this disclosure, the global service node configured to submit the global service and the local service node configured to submit the local service may be collectively referred to as a service node. In some embodiments of this disclosure, the local service node may be referred to as a next-level service node of the global service node.

As shown in FIG. 2, the service SPV node may be a service node in a region corresponding to the local consensus network 201, and may exchange data with the local consensus network 201. For example, the provincial SPV local consensus node (21a shown in FIG. 2) may receive a local service for the local consensus sub-chain that is sent by a service SPV node (the service SPV node 24a shown in FIG. 2), and then the provincial SPV local consensus node (21a shown in FIG. 2) verifies whether the received local service is legal, and packages the local service when verification succeeds, to link the packaged local service to the provincial local consensus sub-chain (that is, the local consensus sub-chain) maintained by the provincial SPV local consensus node.

Under the provincial local consensus network, there may be a next-level local consensus network (for example, a district local consensus network may further be included under the provincial local consensus network) and a next-level service node (that is, a next local service node, for example, a next-level service SPV node of the local service node) that is configured to perform data exchange with the next-level local consensus network. Although these next-level service nodes do not directly synchronize ledger data of the global consensus chain, these next-level service nodes may synchronize ledger data of a provincial local consensus sub-chain maintained by the provincial local consensus network, to synchronize ledger data related to these next-level service nodes from the provincial local consensus sub-chain. This means that when the provincial local consensus network synchronizes service data related to a local service from the global consensus chain by using the provincial main chain SPV node, a next-level service node may indirectly obtain, by using the provincial local consensus network, the service data related to the local service synchronized from the global consensus chain. In addition, the next-level service nodes may further be configured to synchronize ledger data of the local consensus network 201 (for example, a provincial local consensus network), and obtain ledger data related to the next-level service nodes (for example, a district local consensus node and a service SPV node).

A BoomFilter is generally disposed in a connection between an SPV node and a neighboring node. For example, a neighboring node of a provincial main chain SPV node is a global consensus node in a global consensus network, and a neighboring node of a service SPV node is a local consensus node in the local consensus network. If a neighboring node sees that a service satisfies a BoomFilter condition of an SPV node, the neighboring node sends a block to the SPV node by using a merkleblock message (a message form). The merkleblock message includes a blockhead and a Merkle path connected to a Merkle root of the service. The SPV node may associate, by using the Merkle path, a service with a block including the service, and verify, by using the blockhead, that the block including the service is on the blockchain and has been confirmed. The two verifications may prove that the service exists on the blockchain and the SPV node may synchronize corresponding service data from the neighboring node.

For example, when an SPV node is a provincial main chain SPV node, service data of a global service related to the SPV node may be synchronized from a neighboring node (that is, a global consensus node). In an embodiment, when an SPV node is a service SPV node, service data of a local service related to the SPV node may be synchronized from a neighboring node (for example, a local consensus node).

When obtaining a service (for example, a local service) submitted by the service node in a form of a plaintext, the local consensus network performs service processing on service data in the service (for example, the local service) submitted in the form of a plaintext. If some confidential data exists in the service data, privacy and security of the related confidential data cannot be ensured. In some embodiments of this disclosure, a service processing node related to the local consensus network is deployed in the hierarchical blockchain network corresponding to the improved hierarchical structure. A service aggregation process run on the service processing node may be a target data rollup service or a target data two-layer service for optimizing confidential data.

For example, the service aggregation process deployed on the service processing node may be configured to directly receive a service including confidential data that is submitted by a service node. In an embodiment, the service aggregation process deployed on the service processing node may be further configured to indirectly receive a service related to confidential data that is submitted by another service node to the local consensus network, to further optimize the confidential data in the obtained service, and generate, based on the optimized confidential data, a notification message to be transmitted to the local consensus node in the local consensus network. Accordingly, when the local consensus node subsequently links the backhaul data to the local consensus sub-chain, because the service data in the notification message is optimized data obtained after optimizing the confidential data in the service, this embodiment of this disclosure can ensure that the original data of the confidential data is not linked to the local consensus sub-chain, and therefore ensure that another service node located in the same region as the local consensus network cannot obtain the original data of the confidential data, thereby ensuring data isolation between different service nodes in the same region and further improving privacy and security of the confidential data.

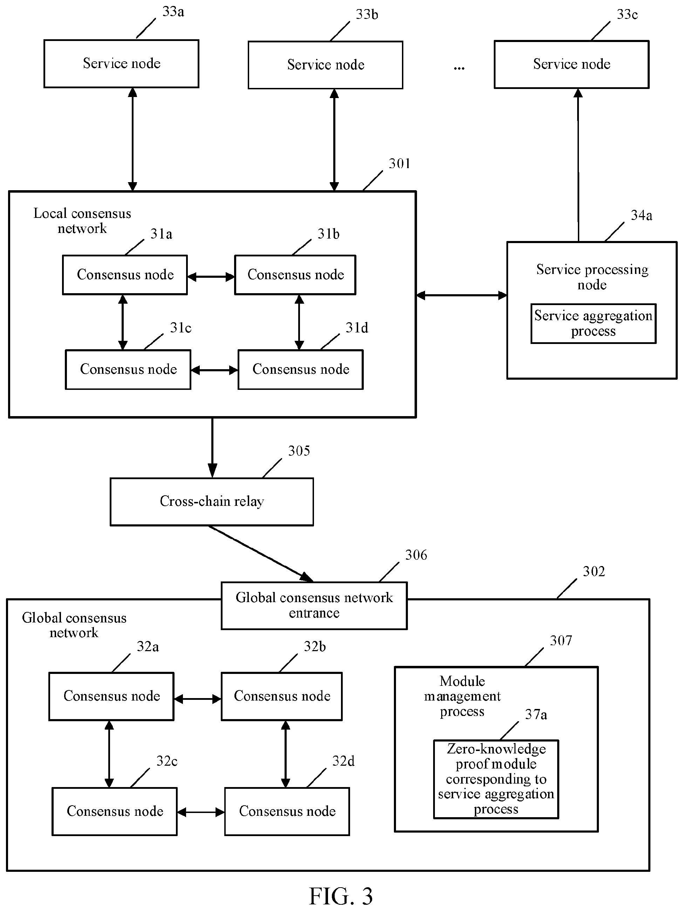

Further, FIG. 3 is a schematic structural diagram of a hierarchical blockchain network provided with a service aggregation process according to an embodiment of this disclosure. As shown in FIG. 3, the hierarchical blockchain network may include a global consensus network 302 and a local consensus network 301. The local consensus network 301 may be the local consensus network 201 in the embodiment corresponding to FIG. 2. The local consensus network 301 shown in FIG. 3 may include a plurality of local consensus nodes for maintaining local consensus sub-chains. The plurality of local consensus nodes may include, but are not limited to, a consensus node 31a, a consensus node 31b, a consensus node 31c, and a consensus node 31d shown in FIG. 3. Similarly, the global consensus network 302 can be the global consensus network 202 in the embodiment corresponding to FIG. 2. The global consensus network 302 shown in FIG. 3 may include multiple global consensus nodes for maintaining global consensus chains. The plurality of global consensus nodes may include, but are not limited to, a consensus node 32a, a consensus node 32b, a consensus node 32c, and a consensus node 32d shown in FIG. 3. The hierarchical blockchain network may further include multiple service nodes associated with the local consensus network. The plurality of service nodes may include, but are not limited to, a service node 33a (for example, a service SPV node 1), a service node 33b (for example, a service SPV node 2), and a service node 33c (for example, a service SPV node 3) shown in FIG. 3.

For the network used for processing a local service, in addition to the local consensus node used for maintaining the local consensus sub-chain, the hierarchical blockchain network may further include a service processing node used for providing a service aggregation process. The service processing node may be a service processing node 34a shown in FIG. 3. One or more service aggregation processes may be started for the same local consensus network, and the one or more service aggregation processes may be run on one service processing node. In an embodiment, different service processing nodes may be deployed for different local consensus networks, and then different service aggregation processes for different local consensus networks may be deployed in different service processing nodes. In some embodiments of this disclosure, starting one service aggregation process for the same local consensus network is used as an example. In this case, the one service aggregation process is run on one service processing node located on the same network as the local consensus network.

In the embodiments of the present disclosure including the embodiments of both the claims and the specification (hereinafter referred to as "all embodiments of the present disclosure"), the service processing node (for example, the service processing node 34a) may be configured to process the service related to confidential data that is submitted in a form of a plaintext. That is, the confidential data is essentially at least one part of service data included in the service (for example, the local service) that is submitted in the plaintext form. In some embodiments of this disclosure, a service refers to a local service including confidential data, and the confidential data included in the service may be referred to as target data. The target data may be specifically an object identification (that is, an identification used to uniquely represent a user) of a service object (for example, a user), personnel information of an enterprise or an institution, customer information of an enterprise or an institution, or the like. This is not limited herein.

For example, the service may be a tax refund service used for tax refund, the tax refund service may carry identification information of a service object that claims tax refund, and the identification information of the service object is the confidential data. For another example, the service may be a credibility service used for querying credibility information, the credibility service may carry identification information of a service object requiring credibility query, and the identification information of the service object is the confidential data.

In all embodiments of the present disclosure, when a service aggregation process is deployed on the service processing node 34a, the service processing node 34a may invoke the service aggregation process to process the service, and to further optimize confidential data included in a service processing result obtained by processing the service, so that confidential data in the service is no longer transmitted to the local consensus node in a form of a plaintext. This can resolve the problem that the local consensus node uploads the confidential data in the service to the local consensus sub-chain in a form of a plaintext, thereby ensuring privacy and security of the confidential data. In addition, this can ensure that the data linked to the local consensus sub-chain is optimized data. The data optimization (also referred to as optimization) refers to hiding or blurring confidential data, thereby avoiding leakage of the confidential data and ensuring security and privacy of the confidential data.

For example, the service aggregation process may be configured to process a tax refund service, the tax refund service may carry identification information of a service object requiring tax refund, and the identification information of the service object is confidential data. In this case, when receiving the tax refund service, the service processing node may obtain a tax payment receipt from the global consensus chain or the local consensus sub-chain based on identification information of a service object in the tax refund service, and then perform tax refunding based on the tax payment receipt. Then, after processing the tax refund service by using the service aggregation process, the service processing node may further optimize (for example, hide an object identification of a service object in the tax refund service), by using the service aggregation process, data (for example, a service processing result of the tax refund service) that needs to be returned to the local consensus node. Then, the optimized data is returned to the local consensus node in a form of a service, thereby ensuring privacy and security of the object identification of the service object.

One service including confidential data (also referred to as a confidential service) may be processed by one service aggregation process, that is, each independent confidential service may have a corresponding service logic and execution module, so that isolation between confidential services may be effectively implemented. If a plurality of types of confidential services need to be processed, a plurality of service aggregation processes may be deployed in a network used for processing a local service. One of the service aggregation processes is used as an example for description herein. In addition, a global consistency capability of the hierarchical blockchain network can be ensured jointly by using a zero-knowledge proof module (or circuit) corresponding to a service aggregation process, a cross-chain backhaul capability of a local consensus sub-chain (for example, aggregation information may be sent to the global consensus network in a form of a service), and a global module management capability of the global consensus network (that is, a module management process shown in FIG. 3). In addition, accuracy of a confidential service can be ensured on a trustless basis.

In some embodiments of this disclosure, the service processing node may be deployed in a data service network, the data service network may be part of the hierarchical blockchain network and the data service network may be independent of the global consensus network and the local consensus network, that is, the service processing node in the data service network belongs to neither the global consensus network nor the local consensus network.

In some embodiments of this disclosure, one service processing node may be deployed for one local consensus network. Therefore, a network formed by different service processing nodes may be the data service network. The data service network may include one or more service processing nodes.

In one or more implementations, the service processing node deployed in the data service network may maintain a private chain. The private chain essentially refers to a distributed storage database implemented based on factors such as network balance. That is, the distributed storage database may be used for distributed storage of data obtained after optimizing confidential data of private services in different regions. In other words, the private chain is essentially a data chain without block consensus. For example, when a quantity of received services is N, the service processing node may perform service aggregation on the N services, to aggregate and package the N services into a block (that is, an aggregation block), invoke a service aggregation process to process each service in the block (that is, the aggregation block), and then may store, into a data chain maintained by the service processing node, the block obtained through packaging (that is, the aggregation block).

The service aggregation process may be a service process that has been registered and verified on the global consensus chain. Because calculation logic corresponding to each service aggregation process needs to be kept private before the each service aggregation process is started, the calculation logic is not public in the entire network. However, the service aggregation process needs to be registered and verified on the global consensus node in the global consensus network. Accordingly, after the service aggregation process is registered and verified on the global consensus node, a module management process shown in FIG. 3 may be invoked to store a zero-knowledge proof module corresponding to the service aggregation process. In this embodiment of this disclosure, it can ensure that the service aggregation process is managed by the global consensus network, and therefore ensure security and reliability of the service aggregation process registered on the global consensus chain, according to a global consensus protocol running in these global consensus nodes in the global consensus network, thereby avoiding creation and starting of a malicious service aggregation process.

The global consensus network may invoke the module management process 307 to store a zero-knowledge proof module corresponding to the service aggregation process that has been registered and verified, for example, store the zero-knowledge proof module 37a corresponding to the service aggregation process shown in FIG. 3. Then, when another service object raises a question about execution logic of the service aggregation process, the global consensus node may invoke the module management process 307 to obtain the zero-knowledge proof module 37a corresponding to the service aggregation process, and then return the obtained zero-knowledge proof module 37a to the another service object for verification.

When the service processing node starts the service aggregation process, the local consensus node in the local consensus network may verify whether the service aggregation process is registered and verified on the global consensus chain. If verifying that the to-be-started service aggregation process is registered and verified on the global consensus chain, the service processing node may be allowed (that is, authorized) to start the service aggregation process. If verifying that the to-be-started service aggregation process is not registered and verified on the global consensus chain, the service processing node is not allowed to start the service aggregation process.

The service aggregation process has a self-organizing block architecture, and it does not need to perform consensus on a block obtained through packaging by the service aggregation process. This means that the block and correctly processing a service are ensured by using the zero-knowledge proof module. The zero-knowledge proof module includes a zero-knowledge proof processing sub-module and a zero-knowledge proof optimization sub-module. In some embodiments of this disclosure, when a block obtained through packaging is provided to the zero-knowledge proof processing sub-module, the zero-knowledge proof processing sub-module may process the block and each service in the block, and then may record a service processing result of each service obtained after each service is processed. The service processing result of each service may include a service processing result confirmation indicating that the respective service is correctly processed. The block processing result of the block may include the service processing results of the N services. Further, the block processing result of the block may be further input to the zero-knowledge proof optimization sub-module, and then the zero-knowledge proof optimization sub-module may desensitize (that is, optimize) the block processing result of the block, to obtain a block optimization result. The block optimization processing result may include an optimization confirmation indicating that the confidential data in the block (i.e., the confidential data of the N services) is optimized. The optimization refers to blurring or hiding the confidential data in a form of a plaintext in the block processing result. In some embodiments of this disclosure, the service processing confirmation and the optimization confirmation are both zero-knowledge proofs (that is, ZK proofs).

The zero-knowledge proof (that is, the ZK proof) uses cryptography to allow a person (a prover) to prove to another person (a verifier) that a fact is absolutely real, but does not disclose any additional information other than a statement about particular authenticity. That is, the ZK proof is essentially for a person to prove that the person knows or owns something, but does not leak any information about what the person knows or owns. Currently, the ZK proof has two main functions: 1. Privacy is ensured, that is, a public data volume is reduced to the greatest extent when an activity is performed on a blockchain. For example, a service related to Zcash (a digital collection) needs to be issued to a public blockchain, but Zcash provides options of a confidential service and financial privacy. Therefore, a zero-knowledge proof may be used to allow the service to be verified without leaking a sender, a receiver, or a service amount. 2. Scalability guarantee: intensive calculation is allowed off the chain. This makes costs lower. Then, a brief proof is created, to indicate that the calculation is honest performed and may be published on the chain. On-chain functions and off-chain functions are respectively performed and become specialized. Further, a centralized and high-performance off-chain system may be used to quickly and effectively process a large quantity of services, and then a decentralized, invariable, and a trustless blockchain is used as a final fact source for recording who owns what. The ZK proof has a very small calculation amount and has a very high verification speed relative to validity proofs of all off-chain services. Once a proof "yes, billions of calculations are 100% proved to be correct" is created, a verifier may confirm that the proof is correct, and does not need to perform another billions of calculations.

After the local consensus network writes, into the local consensus sub-chain, the notification message transmitted by the service processing node by using the service aggregation process, the local consensus node (for example, the consensus node 31a) may further aggregate an optimized service processing result of services within a particular time, encapsulate, according to a service encapsulation format, the aggregated information to obtain an aggregation service, and upload the aggregation service to the global consensus node by using the cross-chain relay 305 shown in FIG. 3.

Specifically, when the local consensus node (for example, the consensus node 31a) obtains the aggregation service, the local consensus node may send the aggregation service to the global consensus network entrance 306 by using the cross-chain relay 305, then the global consensus network entrance 306 may forward the aggregation service to the global consensus network 302, and then the global consensus node (for example, the consensus node 32a) in the global consensus network writes the aggregation service to the global consensus chain.

Based on the foregoing descriptions, an embodiment of this disclosure provides a data processing solution based on a hierarchical blockchain network. In a basic infrastructure of a hierarchical blockchain network (including a global consensus network and a local consensus network), a service aggregation process can be deployed for the local consensus network, then a service processing node invokes the service aggregation process to process N services in a block, to obtain N service processing results and a service processing confirmation that correspond to the N services, and then invokes the service aggregation process to optimize a block processing result including the N service processing results, to obtain a block optimization result including an optimization confirmation, and then obtain a notification message. In addition, the notification message is transmitted to the local consensus node, so that data transmitted to the local consensus node is optimized. Accordingly, privacy and security of service data linked to the local consensus sub-chain can be ensured. In addition, based on the hierarchical blockchain network, each region may correspond to one network used for processing a local service, thereby ensuring service isolation between local services of different regions. In addition, because the service aggregation process deployed on the service processing node is registered and verified on the global consensus node, the global consensus protocol on the global consensus node may be used to ensure security and reliability of the service aggregation process linked to the global consensus chain.

The nodes (for example, the service processing node, the local consensus node, and the global consensus node) may be a server, a terminal device, or another data processing device. This is not limited herein. The server may be an independent physical server, may be a server cluster or a distributed system including a plurality of physical servers, or may be a cloud server providing basic cloud computing services such as a cloud service, a cloud database, cloud computing, a cloud function, cloud storage, a network service, cloud communication, a middleware service, a domain name service, a security service, a CDN, and big data and artificial intelligence platforms. This is not limited herein. The terminal device includes but is not limited to a mobile phone, a computer, an intelligent voice interaction device, a smart home appliance, an in-vehicle terminal, an aircraft, a smart speaker, a smart home appliance, and the like.

In some embodiments of this disclosure, a node can display a prompt interface or a pop-up window when obtaining data (for example, the foregoing object identification, enterprise personnel information, or enterprise customer information) of a service object (for example, the foregoing individual, enterprise, or institution). The prompt interface or the pop-up window is used to indicate to the service object that data such as object identification, enterprise personnel information, and enterprise customer information are to be collected. Only after obtaining a confirmation operation of the service object on the prompt interface or the pop-up window, related operations of obtaining data may be processed. Otherwise, the process ends.

In addition, in specific implementations of this disclosure, service data (for example, data such as the tax payment receipt for tax refund in the tax refund service or the credibility information in the credibility query service) of a service object, such as a user, an enterprise, and an institution, may be involved. When the foregoing embodiments of this disclosure are applied to a specific product or technology, a permission or an approval from a service object, such as a user, an enterprise, and an institution, needs to be obtained. In addition, collection, use, and processing of relevant data need to comply with relevant laws, regulations, and standards of relevant regions.

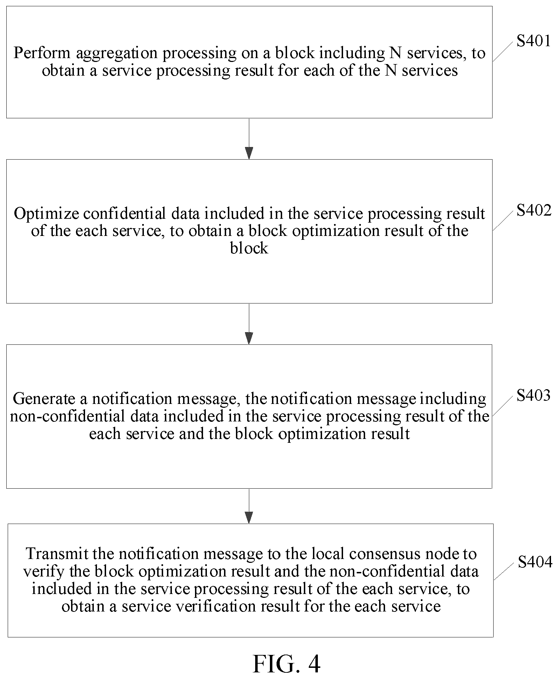

Further, FIG. 4 is a schematic flowchart of a method for processing data using a hierarchical blockchain network according to an embodiment of this disclosure. A hierarchical blockchain network includes a local consensus network deployed in a service layer and a global consensus network deployed in a consensus layer, and a local consensus node, a service processing node and a plurality of service nodes are deployed in the service layer, the local consensus node is a consensus node in the local consensus network, the global consensus node deployed in the consensus layer is a consensus node in the global consensus network. In some embodiments, the local consensus node is configured to: in response to determining that the service aggregation process corresponding to the service processing node has been registered and verified on the global consensus node, authorize the service processing node to start the service aggregation process. In other words, starting of the service aggregation process corresponding to the service processing node is determined by both the local consensus node in the local consensus network and the global consensus node in the global consensus network. The method for processing data using a hierarchical blockchain network is performed by the service processing node and includes operation S401 to operation S404.

S401: Perform aggregation processing on a block including N services, to obtain a service processing result for each of the N services.

N being a positive integer, the N services are transmitted from the plurality of service nodes and each having a pre-set confidentiality level. In some embodiments, when N services are packaged into a block, the service aggregation process may be invoked to process the block, to obtain the service processing result of each service. Each service is a local service that carries confidential data and that is transmitted by a service node associated with the local consensus node, and the service processing result of each service includes data recorded when processing the respective service in the block, and the service processing result may include confidential data of the respective service. In some embodiments of this disclosure, a service is sent by the service node associated with the local consensus node. One service may correspond to one service processing result.

The block may be obtained by packaging the N services obtained currently. The packaging may be performed by the service processing node invoking the service aggregation process to package the N services into one block. As described above, the service may be a confidential service that carries the foregoing confidential data and that is submitted by a service node located in the same region as the service processing node and received by the service processing node. The confidential service is essentially the foregoing local service. For example, the service may be a tax refund service for tax refund of a service object. One service aggregation process may be configured to process one type of confidential service. If a plurality of types of services need to be processed, a plurality of service aggregation processes associated with a local consensus network in a region may be deployed for processing a local service. One of the service aggregation processes is used as an example for description herein.

In some embodiments of this disclosure, the N services may be saved in a service pool corresponding to a data chain maintained by the service processing node, and when a service packaging condition is satisfied, packaging on the N services in the service pool may be performed to obtain the block. The service pool may be used for storing each service that is received by the service processing node and is to be processed (for example, subject to privacy processing). That is, each time the service processing node receives a service, the service processing node may store the service into the service pool, and then when the service packaging condition is satisfied, the service processing node obtains, from the service pool, the N services, and packages the obtained N services into the block. The service packaging condition may be that a timestamp corresponding to the service pool reaches a time threshold, or may be that a quantity of to-be-processed services in the service pool reaches a quantity threshold. This is not limited herein. For example, packaging may be performed once every 10 minutes. In this case, starting from packaging of the last time, after a time interval of 10 minutes is passed, it is determined that the service packaging condition is satisfied. For another example, when a quantity of services saved in the service pool reaches N, packaging may be performed on the service pool.

The service node may be a node for initiating a service. The service node may initiate a private service that carries confidential data, or initiate a local service or a global service that does not carry any confidential data. Among the N services in the block, each service may be initiated by one service node, or one or more services may be initiated by one service node. A quantity of services submitted by each service node to the service processing node is not limited herein. A service node associated with a local consensus node may be a service node belonging to a region in which a corresponding local consensus network is located. For example, a local consensus network of a local consensus node is used for processing a service of a region A. In this case, a service node associated with the local consensus node may be a service node in the region A.

The N services may include a service (for example, the second service) directly sent by the service node to the service processing node, or may include a service (for example, the first service) sent by the service node to the local consensus node and then forwarded by the local consensus node to the service processing node.

Specifically, the service node includes a first service node deployed in the hierarchical blockchain network, and a service sent by the first service node to the local consensus node is a first service. In this case, this embodiment of this disclosure includes: receiving the first service forwarded by the local consensus node, and using the first service as a service of the N services; where a service type of each of the N services is same.

The first service node may be any service node in the hierarchical blockchain network, and the first service node may send a service to a corresponding local consensus node. In other words, the first service node is a node in a service network of the hierarchical blockchain network and that is configured to transmit a service to the local consensus node, and the service transmitted by the first service node to the local consensus node is the first service.

As can be seen, the first service may be a service sent by the first service node to the local consensus node and forwarded by the local consensus node to the service processing node. Then, the service processing node may receive the first service forwarded by the local consensus node, and use the first service as one of the N services. That is, the service processing node may place, into the service pool, the received first service forwarded by the local consensus node, and then when a service packaging condition is satisfied, may determine the N services based on the first service and another service in the service pool, to perform packaging on the N services to obtain the block.

The service aggregation process may be configured to process the confidential service. In this case, service types of confidential services received by the service processing node on which the service aggregation process is deployed are the same (for example, the confidential service type for tax refund). For example, the N services in the block may be of the same service type, that is, the service type of the first service is same as the service type of any one of other services in the N services.

In some embodiments, the service node may further include a second service node deployed in the hierarchical blockchain network. The second service node is a node that is in a service network of the hierarchical blockchain network and that is configured to directly transmit a service to the service processing node. In this case, this embodiment of this disclosure further includes: receiving, by the service processing node, a second service transmitted by the second service node, and using the received second service as a service of the N services; where a service type corresponding to the second service is same as the service type of any one of other services in the N services.

The second service node may be any service node in the hierarchical blockchain network, and the second service node may be a service node that directly sends a service to the service aggregation process. The second service node and the first service node may be the same service node or different service nodes in the service network. This is not limited herein.

The second service may be a service directly sent by the second service node to the service processing node. That is, the service processing node may receive the second service directly sent by the second service node, and use the second service as one of the N services. That is, the service processing node may place, into the service pool, the received second service directly sent by the second service node, and when a service packaging condition is satisfied, may determine the N services including the second service in the service pool, to perform packaging on the N services to obtain the block.

As described above, the service processing node invoking the service aggregation process to process each service and optimize the service processing result may be performed by using a zero-knowledge proof module. The zero-knowledge proof module may be configured to process N services in a block, to obtain a service processing result of each service, then optimize data of the service processing result of each service, to obtain a block optimization result.

The zero-knowledge proof is a proof idea of cryptography. A prover (that is, the service processing node) and a verifier (that is, the local consensus node) negotiate a rule together. According to the rule, the prover provides a string of ciphertext (that is, a proof generated based on the zero-knowledge proof module) to the verifier without leaking a private evidence of the prover. The verifier may perform verification on the ciphertext, and may confirm that the prover has corresponding proof content when the verification succeeds, but the verifier cannot know specific content of the proof. That is, the proof generated based on the zero-knowledge proof module can make the verifier believe that the prover has a capability of correctly processing a service and optimizing a service processing result of the service, but the verifier does not need to know specific implementation of the prover.

The zero-knowledge proof module corresponding to the service aggregation process may include a zero-knowledge proof processing sub-module and a zero-knowledge proof optimization sub-module. The zero-knowledge proof processing sub-module may be configured to process N services in the block, to obtain service processing results including service processing confirmations of the each service. The zero-knowledge proof optimization sub-module may be configured to optimize a block processing result including the N service processing results, to obtain a block optimization result including an optimization confirmation.

In some embodiments, the service processing result of each service is recorded when the service aggregation process is invoked to process each service. One service may correspond to one service processing result.

In some embodiments, the service processing confirmation may be a proof used to indicate that each of N services is correctly processed, that is, in the above descriptions of the zero-knowledge proof, a prover needs to provide a string of ciphertext for verification to a verifier, so that the verifier (that is, a local consensus node) may subsequently verify, by using the service processing confirmation without knowing a specific execution process of the service, whether the service is correctly processed.

Specifically, the service processing node may invoke the service aggregation process to process N services in the block, to obtain N service processing results corresponding to the N services, including service processing confirmations associated with the N services. For example, the service processing node may invoke a service aggregation process, and determine a zero-knowledge proof module corresponding to the service aggregation process; process, using the zero-knowledge proof module, the each service, to obtain the service processing result, the service processing result including a service processing confirmation indicating that the respective service is correctly processed.

The zero-knowledge proof processing sub-module may be configured to process the N services in the block, to obtain a service processing result of each of the N services, and may generate a service processing confirmation associated with each service. That is, the service processing confirmation may be a proof used to indicate correct processing of each service.

For example, the service aggregation process may be configured to process the foregoing tax refund service. That is, the tax refund service received by the service processing node may include some confidential data. The confidential data includes but is not limited to: object information (for example, an object identification) of a service object requiring tax refund. Then, when performing the tax refund service by using the service aggregation process, the service processing node may perform tax refunding for the service object based on the object information of the service object. For example, the service processing node may obtain a tax payment receipt of the service object from a global consensus chain or a local consensus sub-chain based on the object information of the service object, and then perform tax refunding based on the tax payment receipt of the service object, to obtain a service processing result. In this case, the service processing result may include information such as whether tax refund of the service object succeeds, a tax refund amount, and a tax refund time. The service processing result may also involve confidential data (for example, the object information of the service object). Therefore, the service processing node further needs to optimize the confidential data in the service processing result, to obtain an optimized service processing result of the tax refund service.

When the service object initiates the confidential service, that is, the tax refund service, the object information (for example, the object identification) of the service object needs to be obtained. A prompt interface or a pop-up window may be displayed to prompt the service object that the object identification of the service object is to be collected. Only after a confirmation operation of the service object on the prompt interface or the pop-up window is obtained, related operations of obtaining data start to be performed. Otherwise, the process ends. In addition, for a tax refund proof that needs to be obtained in a process of processing the tax refund service, permission or consent of a service object such as a user, an enterprise, or an institution also needs to be obtained, and collection, use, and processing of related data need to comply with related laws and regulations and standards in a related region.

S402: Optimize confidential data included in the service processing result of the each service, to obtain a block optimization result of the block.

In some embodiments, all the service processing results of the N services are aggregated as a block processing result of the block, and invoke the service aggregation process to optimize the block processing result, to obtain a block optimization result, including an optimization confirmation associated with the block processing result. The optimization refers to hiding or blurring the confidential data in the service processing result of each service, and the optimization confirmation is an evidence for indicating that the block processing result is optimized, i.e., each service processing result is optimized. In other words, the optimization confirmation may be specifically a proof that is provided to a verifier (that is, a local consensus node on which verification contract is deployed) and that can indicate that the block processing result is optimized.

The block processing result may be a processing result corresponding to the block, and the block processing result may include N service processing results.

Optimizing the block processing result may be hiding or blurring target data (that is, the confidential data, for example, the object identification of the service object) in the block processing result, to obtain a block optimization result. For ease of description, a block processing result obtained after optimization may be referred to as a block optimization result. For example, if the service processing result of each service in the block processing result includes confidential data (for example, an object identification of a service object corresponding to the corresponding service), the service aggregation process may be further invoked to optimize the confidential data (for example, the object identification of the service object) in each service processing result, that is, a key character in the object identification of the service object may be hidden. For example, the object identification of the service object is 12345, and the key character in the object identification of the service object is hidden by using "*". In this case, the object identification of the service object obtained after the data optimization is 123**. Accordingly, the confidential data in the service processing result of each service in the block processing result is optimized.

The optimization confirmation may be a proof used to indicate that the block processing result is optimized, that is, a string of ciphertext for verification that a prover needs to provide to a verifier in related descriptions of the zero-knowledge proof. Then, the verifier (that is, the local consensus node) may subsequently verify, by using the optimization confirmation while not knowing a specific optimization process, whether the block processing result is correctly optimized.

Specifically, the service processing node may invoke the service aggregation process to optimize a block processing result, to obtain a block optimization result including an optimization confirmation associated with the block processing result. For example, the service processing node may invoke a service aggregation process, and determine a zero-knowledge proof module corresponding to the service aggregation process; optimize, using the zero-knowledge proof module, the confidential data included in the service processing result of the each service, to obtain the block optimization result, the block optimization result including an optimization confirmation indicating that the confidential data of the N services is optimized.

In some embodiments, the zero-knowledge proof optimization sub-module may be configured to optimize a block processing result to obtain a block optimization result, and the zero-knowledge proof optimization sub-module may further generate an optimization confirmation that is provided to the local consensus node and that can verify whether the block processing result is correctly optimized.

S403: Generate a notification message, the notification message including non-confidential data included in the service processing result of the each service and the block optimization result.

In some embodiments, the non-confidential data included in the service processing result may refer to the service processing confirmation. The notification message includes the block optimization result including the optimization confirmation, and the service processing confirmation of the each service included in the service processing result. The notification message does not include any confidential data.

In some embodiments, the non-confidential data included in the service processing result may refer to the service processing confirmation, a hash value of the block processing result including N service processing results, a hash value of each service. The notification message includes the block optimization result including the optimization confirmation, a hash value of the block processing result including N service processing results, a hash value of each service, the service processing confirmation of the each service, and a blockhead of the block.

The notification message may be transmitted to a verifier (that is, a local consensus node on which verification contract is deployed) in a form of a service. That is, when being transmitted to the local consensus node, the block optimization result, the proofs (that is, the service processing confirmation and the optimization confirmation), and other auxiliary proofs (that is, a hash value of the block processing result and hash values of the N services) may be transmitted in a form of a service.

The hash value of the block processing result may be a hash value obtained by performing hash calculation on the block processing result. The hash value of each of the N services may be a hash value obtained by separately performing hash calculation on each service, that is, one service may correspond to one hash value. The blockhead of the block may include information such as a hash value of the block, a hash value of a previous block before the block on the data chain, and a timestamp. This is not limited herein. The hash value of the block is a root hash value of the current block. The root hash value is a hash value obtained after hash calculation is performed on the N services in a block body of block.

The block optimization result, the hash value of the block processing result, the hash value of each service, the service processing confirmation, the optimization confirmation, and the blockhead of the block may be used as service parameters, and then these service parameters are encapsulated into the notification message based on a service encapsulation format associated with the local consensus network.

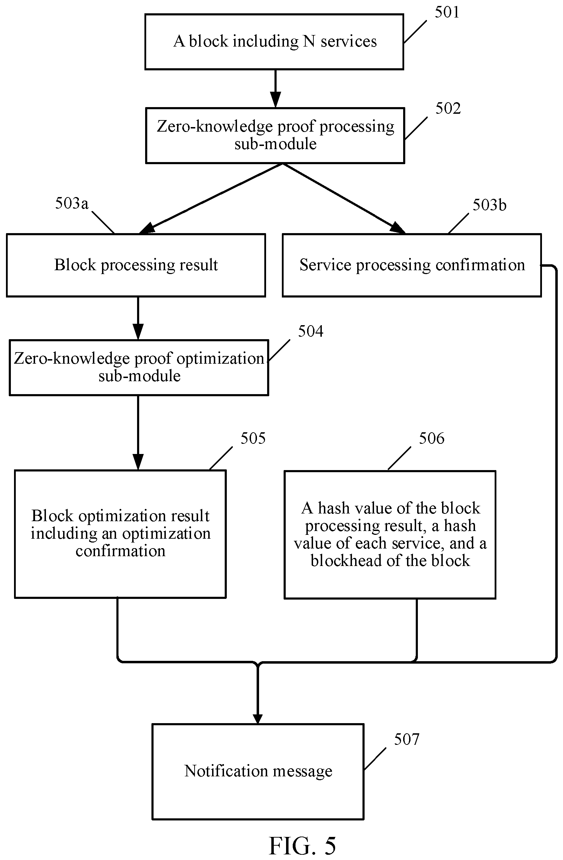

Further, FIG. 5 is a schematic flowchart of obtaining a notification message according to an embodiment of this disclosure. As shown in FIG. 5, the block obtained by the service processing node may be a block 501 shown in FIG. 5. The block 501 may include the N services. Further, as shown in FIG. 5, the service processing node may invoke a zero-knowledge proof processing sub-module 502 to process the block 501, to obtain a block processing result 503a of the block 501 including a service processing confirmation 503b of each service. The block processing result 503a may be determined by the service processing node based on a service processing result of each of the N services.

Further, as shown in FIG. 5, the service processing node may input the block processing result 503a to a zero-knowledge proof optimization sub-module 504, to optimize the block processing result 503a (including the confidential data of each service processing result), to obtain a block optimization result including an optimization confirmation 505 shown in FIG. 5. In addition, other information that needs to be transmitted to the local consensus node, that is, a hash value of the block processing result, a hash value of each service, and a blockhead of the block may be obtained 506. Finally, the notification message 507 is generated.

S404: Transmit the notification message to the local consensus node to verify the block optimization result and the non-confidential data included in the service processing result of the each service, to obtain a service verification result for the each service.

In some embodiments, the local consensus node invokes a verification contract corresponding to the service aggregation process, to verify the notification message to obtain a service verification result to be returned to the service node.

The local consensus node may verify the notification message, that is, verify whether the block optimization result carried in the notification message is a result obtained by correctly processing each service and optimizing data of each service processing result in the block processing result. With reference to the foregoing description, the local consensus node is equivalent to a verifier in the zero-knowledge proof, and verifies the notification message, that is, performs verification based on proofs (that is, a service processing confirmation and an optimization confirmation) in the notification message.

The verification contract may be a smart contract used for verifying the notification message. The verification contract is deployed on a local consensus sub-chain maintained by the local consensus node, so that the local consensus node may invoke the verification contract to verify the notification message. The service verification result may indicate that verification of the notification message succeeds or fails.

After the service verification result is obtained, the service verification result may be returned to a service node sending a corresponding service, so that the service node learns whether the service processing result of the service is successfully verified by the local consensus node.

When the service is the second service directly sent by a service node to the service processing node, the service processing node may further directly return the service processing result of the second service to the corresponding service node (that is, the second service node). This is because when it is configured that the service (for example, the second service) may be directly sent by the service node to the service processing node, secure communication may be established between the service node and the service processing node, and the service node may directly obtain the service processing result of the second service.

As can be seen, the service processing node may directly return the service processing result of the second service to the second service node, or the service processing node may directly return the optimized service processing result to the second service node, or the service processing node may directly return the service processing result and the optimized service processing result to the second service. This is not limited herein. When directly returning the service processing result of the second service to the second service node may be after the block processing result is obtained, or may be after the block optimization result is obtained. This is not limited herein.

Specifically, the block processing result includes a service processing result of the second service. In this case, this embodiment of this disclosure further includes: the service processing node may return the service processing result of the second service to the second service node.

As described above, the second service may be a service directly sent by the second service node to the service processing node. The block processing result may include a service processing result of each of the N services. For example, a second service processing result is obtained by processing the second service. The service processing node may return the service processing result of the second service to the second service node. This is because the second service is directly sent by the second service node to the service processing node. Therefore, the second service node knows the target data (that is, the confidential data) related to the second service, and secure communication is established between the second service node and the service processing node. Therefore, the service processing result including the confidential data may be directly returned to the second service node.

Specifically, the block optimization result includes an optimized service processing result of the second service after optimizing the confidential data of the service processing result of the second service. In this case, this embodiment of this disclosure further includes: the service processing node may return the optimized service processing result of the second service to the second service node.

Optimizing the block processing result may include optimizing data of each service processing result in the block processing result, to obtain an optimized service processing result corresponding to each service. The block optimization result may include the optimized service processing result corresponding to each service, and further, the optimized service processing result of each service may be returned to a corresponding service node.

The service processing node may be configured to maintain a data chain, and after invoking the service aggregation process to process the block, write the processed block into the data chain.

Specifically, the hierarchical blockchain network may further include a data service network corresponding to the service processing node. The data service network is independent of the global consensus network and the local consensus network; and a data chain corresponding to the data service network is constructed based on service types of the N services. In this case, this embodiment of this disclosure may further include: determine, in response to the block optimization result indicating that the each service is correctly processed, the block as a target block to be linked to the data chain; and write the target block into the data chain.

The data chain is constructed based on service types of the N services. The service types of the N services may be the same. For example, service types of the N services in the block are all type 1, and therefore, the service type of each service in each block on the data chain is the type 1.

The target block may be a block to be linked to the data chain. According to a data linking policy, the target block is directly written into the data chain when it is determined, by using the zero-knowledge proof module in the service aggregation process, that each service is correctly processed. Different from writing a block into a blockchain based on a consensus mechanism, in some embodiments of this disclosure, consensus is not performed on the target block to be written into the data chain. That is, the data linking policy corresponding to the service aggregation process indicates that the service processing node can ensure correct processing of the service by using a zero-knowledge proof module. This means that the service processing node may directly write the target block into the data chain.

The data service network may include only the service processing node, or the data service network may include the service processing node and another data backup node configured to back up the data chain. If the data service network includes the data backup node, the service processing node may send the target block to the data backup node when using the block as the target block to be linked to the data chain, so that the data backup node may backup the target block written to the data chain. Generally, the data service network is a lightweight network, that is, the data service network includes only a small quantity of nodes. For example, a quantity of nodes in the data service network may be less than a threshold.

Specifically, the data service network may include a service processing node and a data backup node. The data linking policy is used to indicate that the service processing node is a primary service node in the data service network, and the data backup node is a secondary service node. The data backup node is configured to back up the target block written to the data chain. Accordingly, the service processing node may transmit the target block to the data backup node when the target block is written into the data chain, so that the data backup node may backup the target block.

When the data service network includes the service processing node and the data backup node, the data service network may include one service processing node, and one or more data backup nodes. This is not limited herein.

The primary service node may be a main service node configured to invoke the service aggregation process. The packaging services to obtain the block, invoking the service aggregation process to process services in the block, and optimizing a service processing result, may all be implemented on the service processing node currently used as the primary service node. The secondary service node may be a secondary service node configured to invoke the service aggregation process, and is mainly configured to back up the target block. The primary service node and the secondary service node in a data service network may be determined through negotiation in advance, or may be determined based on load statuses of the nodes. This is not limited herein.

In all embodiments of this disclosure, the hierarchical blockchain network includes a local consensus node, a service processing node, and a plurality of service nodes. The service processing node performs aggregation processing on a block including N services, to obtain a service processing result for each of the N services, N being a positive integer, the N services being transmitted from the plurality of service nodes and each having a pre-set confidentiality level; optimizes confidential data included in the service processing result of the each service, to obtain a block optimization result of the block; generates a notification message, the notification message including non-confidential data included in the service processing result of the each service and the block optimization result; and transmits the notification message to the local consensus node to verify the block optimization result and the non-confidential data included in the service processing result of the each service, to obtain a service verification result for the each service.

In all embodiments of this disclosure, the parameters included in the notification message are all non-confidential parameters. Accordingly, the local consensus node obtains a hash value of a block processing result obtained after optimization. Similarly, the local consensus node obtains a hash value of a confidential service, but no the confidential service including confidential data. Accordingly, when the local consensus node subsequently links the notification message to the local consensus sub-chain, service privacy and security of the service linked to the local consensus sub-chain can also be ensured. In addition, when obtaining the notification message, the local consensus node directly invokes a verification contract corresponding to the service aggregation process, to verify the notification message. Accordingly, calculation overheads of processing a large quantity of services and calculation overheads of optimizing data of a large quantity of service processing results can be fundamentally reduced on the local consensus node side. In some embodiments of this disclosure, the local consensus node may further aggregate optimized service processing results of services within a particular time, and further upload the aggregation information to the global consensus node in a transaction form, so that the global consensus node in the global consensus network may know a current aggregation status of the local consensus network for some local services without obtaining all service data in the local consensus network. Therefore, resource occupation and load of the global consensus node can be reduced while service privacy and security of the local services on the local consensus sub-chain can be ensured.

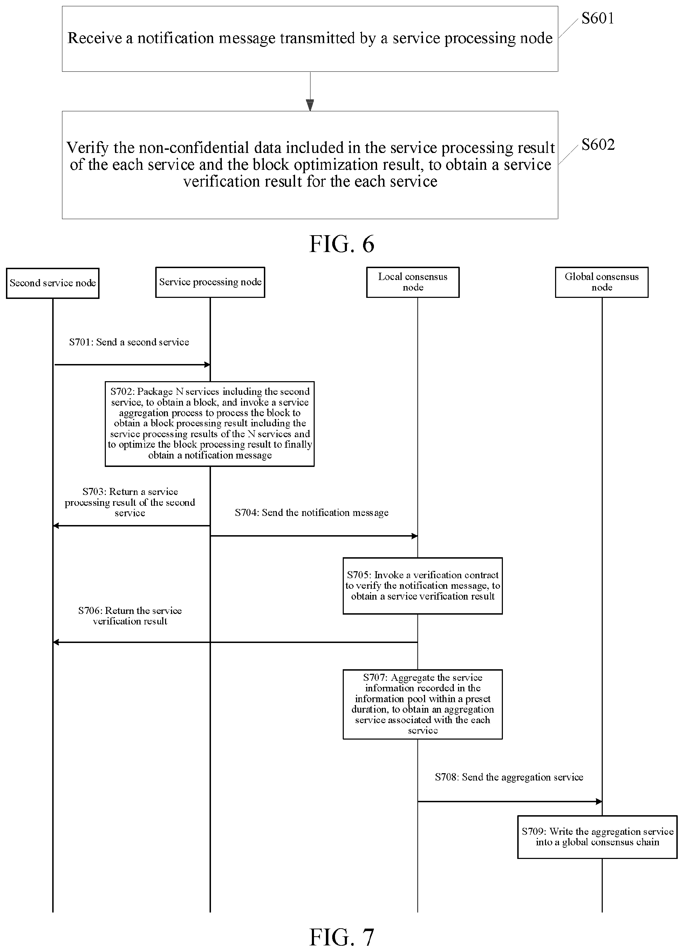

Based on the foregoing description, an embodiment of this disclosure provides a method for processing data using a hierarchical blockchain network. FIG. 6 is a schematic flowchart of a method for processing data using a hierarchical blockchain network according to an embodiment of this disclosure. The hierarchical blockchain network includes a local consensus node, a service processing node, and a plurality of service nodes. The method is performed by a local consensus node, and may include operation S601 and operation S602.

S601: Receive a notification message transmitted by a service processing node.

The notification message includes a service processing result for each of N services and a block optimization result of a block including the N services. As described above, the service processing node performs aggregation processing on the block to obtain the service processing result of the each service and optimizes confidential data included in the service processing result of the each service to obtain the block optimization result, N being a positive integer, the N services being transmitted from the plurality of service nodes and each having a pre-set confidentiality level

In some embodiments, the notification message includes the block optimization result, a hash value of the block processing result, a hash value of each of N services included in the block, a service processing confirmation of the each service, an optimization confirmation, and a blockhead of the block. Each service is a confidential service that carries confidential data and that is transmitted by a service node associated with the local consensus node, and the service processing confirmation is an evidence for indicating that each service is correctly processed, the block processing result includes a service processing result of each service.

For a manner of generating the notification message, refer to the foregoing related descriptions, and details are not described herein again.

As described above, a service of the N services may be the first service that is sent by the first service node to the local consensus node and then forwarded by the local consensus node to the service processing node, and then the local consensus node may subsequently return an optimized service processing result of the first service to the first service node.

Specifically, the service node includes a first service node deployed in the hierarchical blockchain network. In this case, this embodiment of this disclosure further includes: receiving a first service transmitted by the first service node, and forwarding the first service to the service processing node.

For related descriptions of the first service and the first service node, refer to the foregoing descriptions, and details are not described herein again.

As described above, when starting the service aggregation process corresponding to the service processing node, verification needs to be performed on the local consensus node, to verify whether the service aggregation process has been registered and verified in the global consensus network. If it is verified that the to-be-started service aggregation process is registered and verified in the global consensus network, the to-be-started service aggregation process may be allowed to be started. If it is verified that the to-be-started service aggregation process is not registered and verified in the global consensus network, the to-be-started service aggregation process is not allowed to be started.

Specifically, this embodiment of this disclosure may further include the following operations: verifying a service aggregation process being registered in the global consensus network; deploying, in a local consensus sub-chain, a verification contract corresponding to the service aggregation process, and authorizing the service processing node to start the service aggregation process to perform aggregation processing on the block and optimize confidential data included in the service processing result.

In some embodiments, when receiving a starting service of the service aggregation process corresponding to the service processing node, the local consensus mode invokes a process verification contract deployed in the local consensus sub-chain, to verify the service aggregation process; and further, if the verification processing result indicates that the service aggregation process has been registered and verified in the global consensus network, the local consensus mode deploys, in the local consensus sub-chain, a verification contract corresponding to the service aggregation process, and allows the service processing node to start the service aggregation process.

The starting service may be a service used for starting the service aggregation process on the service processing node, and the starting service may be sent by a management node used for managing the service aggregation process. The process verification contract may be a smart contract that is deployed on the local consensus sub-chain and that is used to manage the service aggregation process. For example, the process verification contract may be used such that: when an object needs to start the service aggregation process on the service processing node, the local consensus node may determine, based on the starting service, whether the service aggregation process that currently needs to be started has been registered and verified on the global consensus chain, to implement verification of the service aggregation process. The registered aggregation process may be a service aggregation process that has been registered and verified in the global consensus network.

The verification processing result may be used to indicate that the service aggregation process has been registered and verified in the global consensus network, or the verification processing result may be used to indicate that the service aggregation process has not been registered or verified in the global consensus network.

The verification contract is deployed for the service aggregation process whose verification succeeds (that is, it is verified that the service aggregation process is registered and verified in the global consensus network). In some embodiments of this disclosure, for different service aggregation processes, a verification contract corresponding to the different service aggregation processes may be deployed on the local consensus node. The service aggregation process can be successfully started only when the local consensus node allows (that is, authorizes) the service processing node to start the service aggregation process.

In an embodiment, if the verification processing result indicates that the service aggregation process has not been registered or verified in the global consensus network, the service processing node is not allowed to start the service aggregation process.

Specifically, before the verifying a service aggregation process being registered in the global consensus network, this embodiment of this disclosure may further include the following operations: receiving registration information from the global consensus node, wherein the registration information comprises a service identification of the service aggregation process and digest information of a zero-knowledge proof module corresponding to the service aggregation process; and further, writing the registration information into the process verification contract.

The service identification may be a unique identification of a service aggregation process, and one service identification corresponds to one service aggregation process. The digest information of the zero-knowledge proof module may include digest information of the zero-knowledge proof processing sub-module and digest information of the zero-knowledge proof optimization sub-module.

The global consensus node may receive a registration request for the service aggregation process, then the global consensus node may process the registration request, that is, register and verify the service aggregation process indicated by the registration request, and then the global consensus node writes registration information of the service aggregation process that has been registered and verified into the global consensus chain, and synchronizes the registration information to the local consensus node, so that the local consensus node writes the registration information into the process verification contract.

When the process verification contract is invoked to perform verification on the service aggregation process, if the registration information of the service aggregation process is written into the process verification contract, the service aggregation process may be successfully verified, that is, a verification processing result indicates that the service aggregation process has been registered and verified in the global consensus network. Otherwise, if the registration information of the service aggregation process is not written into the process verification contract, the service aggregation process is not successfully verified, that is, a verification processing result indicates that the service aggregation process has not been registered or verified in the global consensus network. Only when subsequently starting a service aggregation process that is registered and verified in the global consensus network, a corresponding verification contract can be deployed on the local consensus sub-chain, and a corresponding notification message can be verified in the local consensus network.

The global consensus network may be configured to register and verify the service aggregation process, and the global consensus network may store, in the module management process, a zero-knowledge proof module corresponding to the registered and verified service aggregation process. Further, if an object questions a service processing result that is successfully verified by the local consensus node (that is, questions reliability of the zero-knowledge proof module corresponding to the service aggregation process), the local consensus node may obtain a corresponding zero-knowledge proof module from a module management process on the global consensus node, so that the object questioning the service processing result may obtain the zero-knowledge proof module, to verify again the service processing result that is successfully verified on the local consensus sub-chain.

S602: Verify the non-confidential data included in the service processing result of the each service and the block optimization result, to obtain a service verification result for the each service.

In some embodiments, the local consensus node may invoke a verification contract corresponding to the service aggregation process, to verify the notification message to obtain a service verification result, and return the service verification result to the service node.

In some embodiments, the service verification refers to verifying, by using proofs included in the notification message, that the block optimization result is obtained through correct processing and optimization, and the proofs include the service processing confirmation and the optimization confirmation.

As described above, the verification contract may be a smart contract used for verifying the notification message. The verification contract is deployed on a local consensus sub-chain maintained by the local consensus node, so that the local consensus node may invoke the verification contract to verify the notification message. The service verification result may be a result obtained by verifying the notification message, that is, may be used to indicate that verification of the notification message succeeds or fails.

When receiving the notification message, the local consensus node may store the notification message in a local service pool corresponding to the local consensus sub-chain, use the notification message as a local service, then when a service packaging condition corresponding to the local service pool is satisfied (for example, a timestamp corresponding to the local service pool reaches a time threshold, or a quantity of to-be-processed services in the local service pool reaches a quantity threshold), may package local services in the local service pool to obtain a corresponding block, then perform block consensus on the block, and when block consensus is finished, may write the block including the local services into the local consensus sub-chain. It may invoke the verification contract to verify the notification message.

Specifically, the verifying the non-confidential data included in the service processing result of the each service and the block optimization result may include the following operations: invoking a service aggregation process, and determining a verification contract corresponding to the service aggregation process, the verification contract including a first verification function and a second verification function; invoking the first verification function to verify a hash value of the each service and the service processing confirmation; invoking the second verification function to verify a hash value of the block processing result and the optimization confirmation.

The verification contract is used to perform verification on the results obtained by the zero-knowledge proof module, and may be obtained using verification functions based on hash values and proofs.

The performing verification on a block processing result obtained by the zero-knowledge proof processing sub-module (that is, performing verification on correct processing of each service) may be specifically performing verification based on a hash value of each of N services and a corresponding proof (that is, a service processing confirmation).

The performing verification on a block optimization result obtained by the zero-knowledge proof optimization sub-module (that is, performing verification on optimization of a block processing result) may be specifically performing verification based on a hash value of the block processing result and a corresponding proof (that is, an optimization confirmation).

The first verification function may be used for verifying whether a block processing result is correctly processed based on a zero-knowledge proof processing sub-module, to indicate that verification of the block processing result succeeds or verification of the block processing result fails.

The second verification function may be used to verify whether a block optimization result is correctly optimized based on a zero-knowledge proof optimization sub-module, to indicate whether verification of the block optimization result succeeds or verification of the block optimization result fails.

Only when both verifications succeed, it is determined that the service verification result is used to indicate that verification of the notification message succeeds.

In some embodiments, the service processing node is configured to maintain a data chain, this embodiment of this disclosure may further include the following operations: determining, based on a blockhead of the block, a block height of the block in the data chain; and updating a maximum block height of the data chain based on the block height of the block.

Each block on the data chain may have a corresponding block generation timestamp, and the block generation timestamp is also referred to as a block timestamp. The block generation timestamp is used to indicate information about a time for generating a block.

For example, the maximum block height before updating is 50 and the block height of the block is 51. In this case, the maximum block height is updated to be 51.

For another example, the maximum block height before updating is 46, and the maximum block height is updated to be 51. In this case, the blocks 47, 48, 49, 50, and 51 are all performed consensus.

By continuously updating the block and the maximum block height, the local consensus node may manage a block increase speed on the data chain. For example, when the maximum block height that is updated is greater than a preset expected value, it indicates that a block height increase speed on the data chain is excessively high, and then the local consensus node may notify the management node to suspend a corresponding service aggregation process.

In an embodiment, when the service verification result is used to indicate that verification of the notification message succeeds, it may be determined that the block height that is updated becomes valid, and subsequently a service node or a global consensus node may read, from the local consensus node, an optimized block processing result of the block whose status becomes valid.

In an embodiment, if the service verification result is used to indicate that verification of the notification message fails, the service processing node is notified to regenerate a notification message.

The service processing node is notified to regenerate a notification message, thereby avoiding verification failure caused by a data format error of the notification message or a service format error of the service.

The service verification result is used to indicate that verification of the notification message fails. This may be because an incorrect zero-knowledge proof module is used, an incorrect hash value of a service is used during verification, a malicious person causes trouble, a data format of the notification message is incorrect, a service format of the service is incorrect, or the like. This is not limited herein. Then a corresponding error may be detected based on some error detection mechanisms, or processing may be performed based on some management mechanisms. This is not limited herein. In an embodiment, when no malicious person causes trouble, if verification of the notification message fails, a system of the service aggregation process may be problematic. The data chain may be reset, or the service processing node may be notified to perform block rollback on the data chain whose verification fails, or the data chain may be processed in some other manners. This is not limited herein.

As described above, if a service is sent by a service node to the local consensus node and then forwarded by the local consensus node to the service processing node, after verifying a notification message corresponding to the service, the local consensus node may return an optimized service processing result and a service verification result to the corresponding service node. Because all service processing results of the notification message received by the local consensus node are optimized service processing results, a service processing result returned by the local consensus node to the service node can only be an optimized service processing result, thereby ensuring privacy and security of data.

In an embodiment, the block processing result includes a service processing result of the first service; the service processing result of the first service is obtained by processing the first service in the block; the block optimization result includes an optimized service processing result of the first service; and the optimized service processing result of the first service is obtained after optimizing data of the service processing result of the first service. In this case, this embodiment of this disclosure further includes: returning the optimized service processing result to the first service node.

The first service may be a service that is sent by the first service node to the local consensus node and that is forwarded by the local consensus node to the service processing node. The block processing result may include a service processing result of each of the N services, and the service processing result of each service is obtained by processing a corresponding service. The block optimization result may include an optimized service processing result of each of the N services, and the optimized service processing result of each service is obtained by optimizing data of a corresponding service processing result. For example, the service processing result of the first service is obtained by processing the first service, and the optimized service processing result of the first service is obtained by optimizing data of the service processing result of the first service. The local consensus node may return the service processing result of the first service to the first service node, and the local consensus node may further return the service verification result of the first service to the first service node. The local consensus node may send the optimized service processing result and the service verification result of the first service to the first service node together, or the local consensus node may separately send the service processing result and the service verification result of the first service to the first service node. This is not limited herein.

As described above, if a service is directly sent by a service node to the service processing node, after verifying a notification message corresponding to the service, the local consensus node may return only a service verification result of the service to the corresponding service node. And the service processing result of the service may be directly returned by the service processing node to the corresponding service node.

The service node may also synchronize a status of the local consensus sub-chain to determine that a service sent by the service node has been performed consensus on the local consensus sub-chain at a particular block height, so that service query for the service may be performed subsequently. For example, a block height value at which a block of a service A is written into the data chain is X, a notification message corresponding to the service A is transmitted to the local consensus node, and the local consensus node verifies the notification message on a block whose block height value is Y on the local consensus sub-chain. The service node may also synchronize a status of the local consensus sub-chain to determine that the service A that is sent by the service node and that is at the block height value X on the data chain has been determined on the local consensus sub-chain.

After notification messages corresponding to some services are written into the local consensus sub-chain, the local consensus node may aggregate optimized service processing results of the services within a particular time, and upload information obtained through aggregation (that is, aggregation information) to the global consensus node, so that the global consensus node in the global consensus network may know a current aggregation status of the local consensus network for some local services, without obtaining all service data in the local consensus network, thereby reducing resource occupation and load of the global consensus node.

Specifically, this embodiment of this disclosure may further include the following operations: determining, based on the service verification result, service information for the each service, and adding the service information into an information pool; aggregating the service information recorded in the information pool at a preset time instant, to obtain an aggregation service associated with the each service; and transmitting, by using a cross-chain relay associated with the local consensus node, the aggregation service to the global consensus node, so that the global consensus node links the aggregation service to a global consensus chain maintained by the global consensus node.

For example, if the service is a tax refund service, the service information within a preset duration includes a quantity of objects for which tax refund is completed each under a tax refund amount range, the aggregation service may include information such as whether tax refund is completed and a tax refund amount.

If the service verification result indicates that verification of the notification message succeeds, the aggregation service may be determined; otherwise, the aggregation service may not be determined.

The information pool may be used to store service information corresponding to each service. The preset duration may be determined based on a time instant in one day. For example, information aggregation may be performed at 0 o'clock each day. In this case, the service information may include a quantity of objects for which tax refund is completed within one day.

The cross-chain relay may be a device configured to implement cross-chain interaction between the local consensus node and the global consensus node, for example, the provincial main chain SPV node. The service information may be aggregated in a form of a service, i.e., the aggregation service. Then, the local consensus node may send the aggregation service to the global consensus node, so that the global consensus node links the aggregation service to a global consensus chain maintained by the global consensus node.

When receiving the aggregation service, the global consensus node may store the aggregation service in a global service pool corresponding to the global consensus chain, use the aggregation service as a global service, then when a service packaging condition corresponding to the global service pool is satisfied (for example, a timestamp corresponding to the global service pool reaches a time threshold, or a quantity of to-be-processed services in the global service pool reaches a quantity threshold), may package the global services in the global service pool to obtain a corresponding block, then perform block consensus and write the block into the global consensus chain, that is, the global consensus node links (uploads) the aggregation service to the global consensus chain maintained by the global consensus node.

The entire data processing is described herein with reference to a figure. FIG. 7 is a schematic interaction diagram of a method for processing data using a hierarchical blockchain network according to an embodiment of this disclosure. As shown in FIG. 7, the data processing method relates to a service processing node, a local consensus node in a local consensus network, a global consensus node in a global consensus network, and a second service node. A service aggregation process corresponding to the service processing node needs to be registered and verified in a global consensus network, and starting of the service aggregation process is authorized after the local consensus node performs verification.

Specifically, a second service node sends a second service to a service processing node (operation S701). The service processing node packages N services including the second service, to obtain a block, and invokes a service aggregation process to process the block to obtain a block processing result including the service processing results of the N services and to optimize the block processing result to finally obtain a notification message (operation S702). A specific process of obtaining the notification message can be found in the description of the corresponding embodiment of FIG. 4. Details are not described herein again.

Then, the service processing node may return a service processing result of the second service to the second service node (operation S703). The service processing result of the second service is a service processing result of the second service whose data has not been optimized. In some embodiments of this disclosure, after the block processing result is optimized, an optimized service processing result of the second service may be further returned to the second service node. In some embodiments of this disclosure, the service processing result and the optimized service processing result of the second service may be returned. This is not limited herein. As shown in FIG. 7, the service processing node may further send the notification message to a local consensus node (operation S704). The local consensus node may invoke a verification contract to verify the notification message, to obtain a service verification result (operation S705). Then, the local consensus node may return the service verification result to the second service node (operation S706).

Further, the local consensus node may determine, based on the service verification result, service information for the each service, and adding the service information into an information pool; aggregate the service information recorded in the information pool within a preset duration, to obtain an aggregation service associated with the each service (operation S707). Then, the local consensus node sends the aggregation service to a global consensus node (operation S708). Then, the global consensus node may write the aggregation service into a global consensus chain (operation S709).

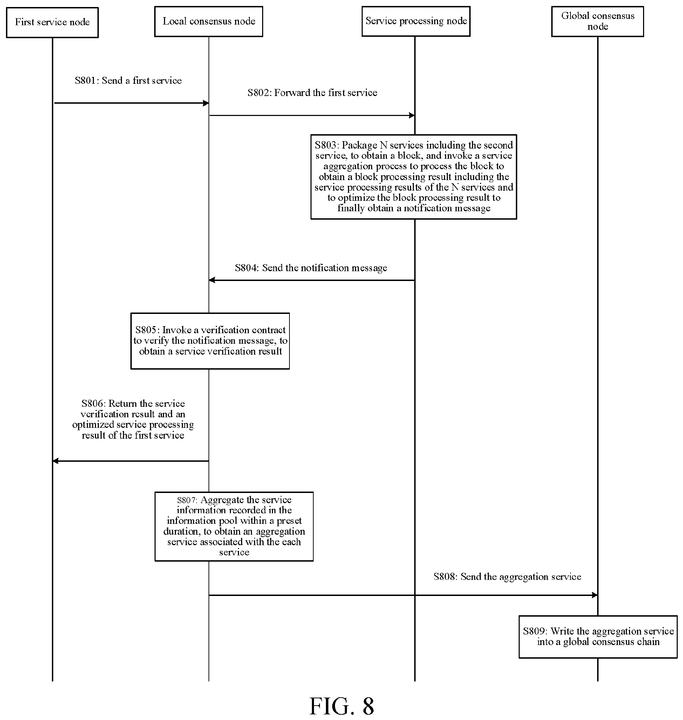

Another data processing is described herein with reference to a figure. FIG. 8 is a schematic interaction diagram of a method for processing data using a hierarchical blockchain network according to an embodiment of this disclosure. As shown in FIG. 8, the data processing method relates to a service processing node, a local consensus node in a local consensus network, a global consensus node in a global consensus network, and a first service node. A service aggregation process corresponding to the service processing node needs to be registered and verified in a global consensus network, and starting of the service aggregation process is authorized after the local consensus node performs verification.

Specifically, a first service node sends a first service to a local consensus node (operation S801). The local consensus node forwards the first service to a service processing node (operation S802). The service processing node packages N services including the first service, to obtain a block, and invokes a service aggregation process to process the block to obtain a block processing result including the service processing results of the N services and to optimize the block processing result to finally obtain a notification message (operation S803). Then, the service processing node sends the notification message to the local consensus node (operation S804). The local consensus node may invoke a verification contract to verify the notification message, to obtain a service verification result (operation S805). Then, the local consensus node returns the service verification result and an optimized service processing result of the first service to the first service node (operation S806). Further, the local consensus node may determine, based on the service verification result, service information for the each service, and adding the service information into an information pool; aggregate the service information recorded in the information pool within a preset duration, to obtain an aggregation service associated with the each service (operation S807). Then, the local consensus node sends the aggregation service to a global consensus node (operation S808). Then, the global consensus node may write the aggregation service into a global consensus chain (operation S809).

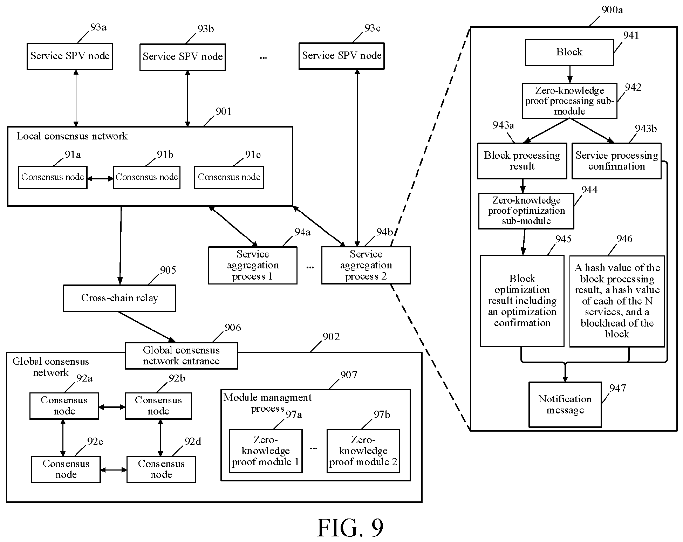

A data processing of the entire hierarchical blockchain network is described herein with reference to a scenario diagram. FIG. 9 is a schematic flowchart of a process based on a hierarchical blockchain network according to an embodiment of this disclosure. As shown in FIG. 9, in the hierarchical blockchain network, a plurality of service aggregation processes such as a service aggregation process 1 (that is, shown in 94a) and a service aggregation process 2 (that is, shown in 94b) are deployed for a local consensus network. The service aggregation process 1 (that is, shown in 94a) and the service aggregation process 2 (that is, shown in 94b) may be configured to process confidential services of different types. A service processing node on which the service aggregation process 1 runs may correspond to a data service network. The data service network may include one or more service processing nodes configured to process confidential services of the same type. A service processing node on which the service aggregation process 2 runs may correspond to another data service network. The another data service network may include one or more service processing nodes that process confidential services of another type. This means that in the hierarchical blockchain network, the service processing node corresponding to the service aggregation process 1 and the service processing node corresponding to the service aggregation process 2 are different nodes.

In some embodiments of this disclosure, the service processing node on which the service aggregation process runs may receive a confidential service of a corresponding type that is forwarded by a local consensus node (for example, a consensus node 91a, a consensus node 91b, or a consensus node 91c), or may receive a confidential service of a corresponding service type that is directly sent by a service SPV node (for example, a service SPV node 93c). This is not limited herein. When the service processing node on which the service aggregation process runs receives a confidential service forwarded by a local consensus node (for example, the consensus node 91a, the consensus node 91b, or the consensus node 91c), the interaction among the nodes may refer to the related description of FIG. 8. In an embodiment, when the service processing node on which the service aggregation process runs receives a confidential service directly send by a service SPV node (for example, the service SPV node 93c), the interaction among the nodes may refer to the related description of FIG. 7. Details are not described herein again.

For ease of understanding, the service aggregation process is the service aggregation process 2 shown in FIG. 9 as an example. The service aggregation process 2 may refer to a service aggregation process shown in 900a, as descripted about FIG. 5. That is, the service processing node may obtain a block 941 shown in FIG. 9, then invoke a zero-knowledge proof processing sub-module 942 to process the block, to obtain a block processing result 943a and a service processing confirmation of the each service 943b, then input the block processing result 943a to a zero-knowledge proof optimization sub-module 944, to optimize the block processing result 943a, to obtain a block optimization result including an optimization confirmation 945, and then construct a notification message 947 shown in FIG. 9 based on the block optimization result, the optimization confirmation 945, the service processing confirmation of the each service 943b, a hash value of the block processing result, a hash value of each of the N services, and a blockhead of the block 946.

The local consensus node may send an aggregation service to the global consensus network 902 by using the cross-chain relay 905, specifically send to a global consensus network entrance 906, and then the global consensus network entrance 906 sends the aggregation service to the global consensus network 902. Then, a global consensus node (for example, the consensus node 92a, the consensus node 92b, the consensus node 92c, and the common node 92d) in the global consensus network may write the aggregation service into the global consensus chain. For a data exchange process between the local consensus network 901 and the global consensus network 902, refer to related descriptions of FIG. 7 and FIG. 8, and details are not described herein again.

The service aggregation process 1 and the service aggregation process 2 may both be service processes that have been registered and verified in the global consensus network. Besides, after registering and verifying the service aggregation process, the global consensus node may store, in the module management process 907, a zero-knowledge proof module corresponding to the service aggregation process that has been registered and verified, such as a zero-knowledge proof module 1 (that is, 97a) or a zero-knowledge proof module 2 (that is, 97b) included in the module management process 907.

In the embodiments of this disclosure, in a basic infrastructure of a hierarchical blockchain network (including a global consensus network and a local consensus network), the local consensus network may be deployed in a service layer, and the global consensus network may be deployed in a consensus layer. In addition, to ensure service privacy and security of some services (for example, confidential services) associated with the local consensus network, in the embodiments of this disclosure, a service processing node independent of a local consensus node may be deployed in the service layer of the hierarchical blockchain network. In the embodiments of this disclosure, when obtaining a block including N services, the service processing node may further process the N services in the block, to obtain a service processing result of each of the N services, including a service processing confirmation associated with each service. The service processing confirmation may be an evidence for indicating that each service is correctly processed. Then, the block processing result is optimized to obtain a block optimization result, including an optimization confirmation. Accordingly, a notification message may be generated and transmitted to the local consensus node. Therefore, the local consensus node may obtain an optimized service processing result of each service. That is, in the embodiments of this disclosure, data exchange among the global consensus node, the local consensus node, and the service processing node can ensure privacy and security of service data of a confidential service related to the local consensus node.

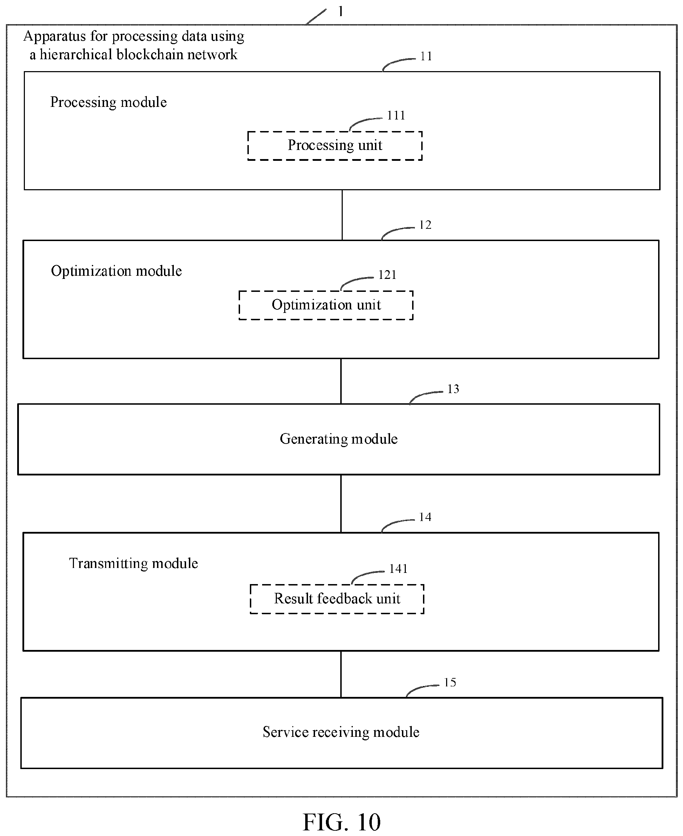

FIG. 10 is a first schematic structural diagram of an apparatus for processing data using a hierarchical blockchain network according to an embodiment of this disclosure. As shown in FIG. 10, the apparatus 1 for processing data using a hierarchical blockchain network may be a computer program (including program code) running on a service processing node. For example, the apparatus 1 is application software. The apparatus 1 may be configured to perform corresponding operations in the method for processing data using a hierarchical blockchain network provided in the embodiments of this disclosure. As shown in FIG. 10, the apparatus 1 may include: a processing module 11, an optimization module 12, a generating module 13, and a transmitting module 14.

The processing module 11 is configured to perform aggregation processing on a block comprising N services, to obtain a service processing result for each of the N services, N being a positive integer, the N services being transmitted from the plurality of service nodes and each having a pre-set confidentiality level.

The optimization module 12 is configured to optimize confidential data included in the service processing result of the each service, to obtain a block optimization result of the block.

The generating module 13 is configured to generate a notification message, the notification message comprising the block optimization result and non-confidential data included in the service processing result of the each service.

The transmitting module 14 is configured to transmit the notification message to the local consensus node to verify the block optimization result and the non-confidential data included in the service processing result of the each service, to obtain a service verification result for the each service.

The processing module 11 includes: a processing unit 111.

The processing unit 111 is configured to invoke a service aggregation process, and determining a zero-knowledge proof module corresponding to the service aggregation process; process, using the zero-knowledge proof module, the each service, to obtain the service processing result, the service processing result comprising a service processing confirmation indicating that the respective service is correctly processed.

The optimization module 12 includes: an optimization unit 121.

The optimization unit 121 is configured to invoke a service aggregation process, and determining a zero-knowledge proof module corresponding to the service aggregation process; optimize, using the zero-knowledge proof module, the confidential data included in the service processing result of the each service, to obtain the block optimization result, the block optimization result comprising an optimization confirmation indicating that the confidential data of the N services is optimized.

A first service node in the plurality of service nodes transmits a first service to the local consensus node.

The apparatus 1 further includes: a service receiving module 15.

The service receiving module 15 is configured to receive the first service forwarded by the local consensus node.

The service receiving module 15 is further configured to receive a second service transmitted by a second service node in the plurality of service nodes.

The transmitting module 14 includes a result feedback unit 141.

The result feedback unit 141 is configured to return the service processing result of the second service to the second service node.

The block optimization result includes an optimized service processing result of the second service after optimizing the confidential data of the service processing result of the second service.

The result feedback unit 141 is further configured to return the optimized service processing result of the second service to the second service node.

The service processing node is in a data service network; and a data chain corresponding to the data service network is constructed based on service types of the N services.

The generating module 13 is further configured to determine, in response to the block optimization result indicating that the each service is correctly processed, the block as a target block to be linked to the data chain; and

the generating module 13 is further configured to write the target block into the data chain.

The data service network includes a data backup node; and
the generating module 13 is further configured to transmit in response to writing the target block into the data chain, the target block to the data backup node to back up the target block.

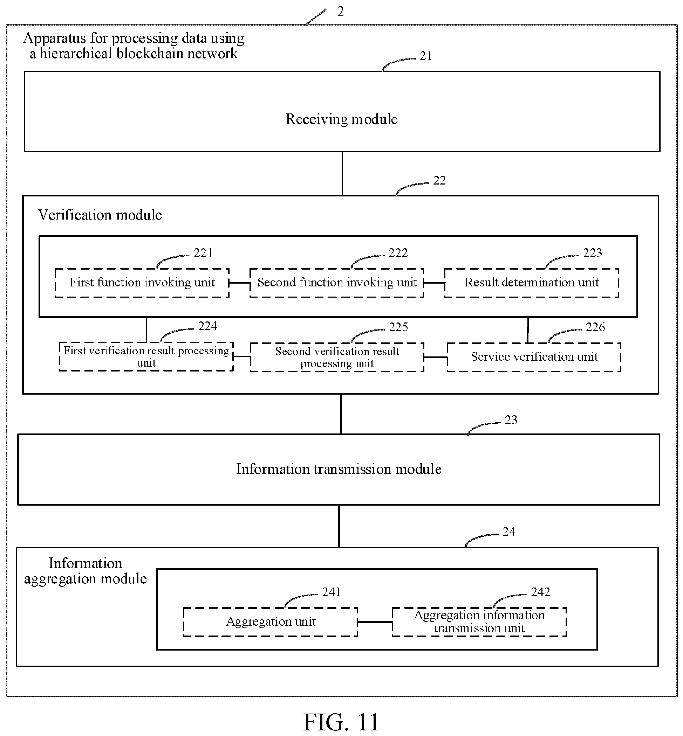

FIG. 11 is a second schematic structural diagram of an apparatus for processing data using a hierarchical blockchain network according to an embodiment of this disclosure. As shown in FIG. 11, the apparatus 2 for processing data using a hierarchical blockchain network may be a computer program (including program code) running on a local consensus node. For example, the apparatus 2 is application software. The apparatus 2 may be configured to perform corresponding operations in the method for processing data using a hierarchical blockchain network provided in the embodiments of this disclosure. As shown in FIG. 11, the apparatus 2 may include: a receiving module 21 and a verification module 22.

The receiving module 21 is configured to receive a notification message from a service processing node, the notification message comprising non-confidential data included in a service processing result of each of N services and a block optimization result of a block comprising the N services, the service processing node performing aggregation processing on the block to obtain the service processing result of the each service and optimizing confidential data included in the service processing result of the each service to obtain the block optimization result, N being a positive integer, the N services being transmitted from the plurality of service nodes and each having a pre-set confidentiality level.

The verification module 22 is configured to verify the block optimization result and the non-confidential data included in the service processing result of the each service, to obtain a service verification result for the each service .

The plurality of service nodes comprises a first service node.

The receiving module 21 is further configured to receive a first service transmitted by the first service node, and forwarding the first service to the service processing node.

The block processing result includes a first service transmitted by the first service node, and forwarding the first service to the service processing node.

The apparatus 2 further includes an information transmission module 23.

The information transmission module 23 is configured to return the optimized service processing result to the first service node.

The verification module 22 includes: a first function invoking unit 221, a second function invoking unit 222, and a result determination unit 223.

The first function invoking unit 221 is configured to invoke the first verification function to verify a hash value of the each service and the service processing confirmation.

The second function invoking unit 222 is configured to invoke the second verification function to verify a hash value of the block processing result and the optimization confirmation.

The result determination unit 223 is configured to determine, based on the result of the first function invoking unit 221 and the result of the second function invoking unit 222, that the service verification result.

The service processing node is in a data service network; and a data chain corresponding to the data service network is constructed based on service types of the N services.

The verification module 22 further includes: a first verification result processing unit 224.

The first verification result processing unit 224 is configured to determine based on a blockhead of the block, a block height of the block in the data chain; and update a maximum block height of the data chain based on the block height of the block.

The verification module 22 further includes: a second verification result processing unit 225.

The second verification result processing unit 225 is configured to: when the service verification result is used to indicate that verification of the notification message fails, notify the service processing node to regenerate a notification message.

The apparatus 2 includes: an information aggregation module 24. The information aggregation module 24 includes: an aggregation unit 241 and an aggregation information transmission unit 242.

The aggregation unit 241 is configured to determine, based on the service verification result, service information for the each service, and adding the service information into an information pool; aggregate the service information recorded in the information pool within a preset duration, to obtain an aggregation service associated with the each service.

The aggregation information transmission unit 242 is configured to transmit, by using a cross-chain relay associated with the local consensus node, the aggregation service to the global consensus node, so that the global consensus node links the aggregation service to a global consensus chain maintained by the global consensus node.

The verification module 22 includes: a service verification unit 226.

The service verification unit 226 is configured to verify a service aggregation process being registered in the global consensus network; deploy, in a local consensus sub-chain, a verification contract corresponding to the service aggregation process, and authorizing the service processing node to start the service aggregation process to perform aggregation processing on the block and optimize confidential data included in the service processing result.

The service verification unit 226 is further configured to receive registration information from the global consensus node, wherein the registration information comprises a service identification of the service aggregation process and digest information of a zero-knowledge proof module corresponding to the service aggregation process; and use the registration information to verify the service aggregation process.

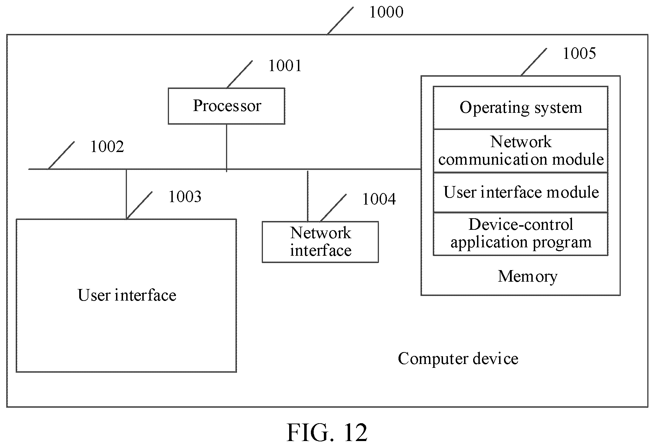

FIG. 12 is a schematic structural diagram of a computer device according to an embodiment of this disclosure. As shown in FIG. 12, the computer device 1000 may include: a processor 1001, a network interface 1004, and a memory 1005, and in addition, the computer device 1000 may further include: a user interface 1003, and at least one communication bus 1002. The communication bus 1002 is configured to implement connection and communication between these components. The user interface 1003 may include a display and a keyboard. In an embodiment, the user interface 1003 may further include a standard wired interface and wireless interface. The network interface 1004 may include a standard wired interface and wireless interface (for example, a WiFi interface). In an embodiment, the memory 1005 may be a high-speed RAM memory, or may be a non-volatile memory, for example, at least one magnetic disk memory. In some embodiments, the memory 1005 may alternatively be at least one storage apparatus away from the processor 1001. As shown in FIG. 12, the memory 1005 used as a computer-readable storage medium may include an operating system, a network communications module, a user interface module, and a device-control application program.

In the computer device 1000 shown in FIG. 12, the network interface 1004 may provide a network communication function. The user interface 1003 is mainly configured to provide an input interface for a user. The processor 1001 may be configured to invoke a device-control application program stored in the memory 1005, so as to process the description of the data processing method in any one of the foregoing corresponding embodiments. Details are not described herein again. In addition, the description of beneficial effects of the same method are not described herein again.

Besides, an embodiment of this disclosure further provides a computer-readable storage medium. The computer-readable storage medium stores a computer program processed by the apparatus 1 and the apparatus 2 based on a hierarchical chain, and the computer program includes program instructions. When the processor process the program instructions, the description of the method for processing data using a hierarchical blockchain network in the foregoing embodiment can be processed. Therefore, details are not described herein again. In addition, the description of beneficial effects of the same method are not described herein again. For technical details that are not disclosed in the embodiments of the computer-readable storage medium in this disclosure, refer to the descriptions of the method embodiments of this disclosure.

The computer-readable storage medium may be the apparatus for processing data using a hierarchical blockchain network in any one of the above embodiments or an internal storage unit of the computer device, such as a hard disk or a memory of the computer device. The computer-readable storage medium may also be an external storage device of the computer device, such as a plug-in hard disk equipped on the computer device, a smart media card (SMC), a secure digital (SD) card, a flash card, or the like. Further, the computer-readable storage medium may also include both the internal storage unit and the external storage device of the computer device. The computer-readable storage medium is configured to store the computer program and other programs and data that are required by the computer device. The computer-readable storage medium can also be configured to temporarily store data that has been outputted or will be outputted.

Besides, an embodiment of this disclosure further provides a computer program product or a computer program, the computer program product or the computer program including computer instructions, and the computer instructions being stored in a computer-readable storage medium. A processor of a computer device reads the computer instructions from the computer-readable storage medium, and the processor processes the computer instructions, so that the computer device processes the method provided in any one of the foregoing corresponding embodiments. In addition, the description of beneficial effects of the same method are not described herein again. For the technical details not disclosed in the embodiment of the computer program product or the computer program in the application, refer to the description of the method embodiments of this disclosure.

A person of ordinary skill in the art may understand that, units and algorithm operations of the examples described in the foregoing disclosed embodiments may be implemented by electronic hardware, computer software, or a combination thereof. To clearly describe the interchangeability between the hardware and the software, the foregoing has generally described compositions and operations of each example based on functions. Whether the functions are processed in a mode of hardware or software depends on particular applications and design constraint conditions of the technical solutions.

## Claims

1. A method for processing data using a hierarchical blockchain network, the hierarchical blockchain network comprising a local consensus node, a service processing node, and a plurality of service nodes, the method being executable by the service processing node and comprising:
performing aggregation processing on a block comprising N services, to obtain a service processing result for each of the N services, N being a positive integer, the N services being transmitted from the plurality of service nodes and each having a pre-set confidentiality level;
optimizing confidential data included in the service processing result of the each service, to obtain a block optimization result of the block;
generating a notification message, the notification message comprising the block optimization result and non-confidential data included in the service processing result of the each service; and
transmitting the notification message to the local consensus node to verify the block optimization result and the non-confidential data included in the service processing result of the each service, to obtain a service verification result for the each service.

2. The method according to claim 1, wherein the performing aggregation processing on a block comprising N services, to obtain a service processing result for each of the N services comprises:
invoking a service aggregation process, and determining a zero-knowledge proof module corresponding to the service aggregation process;
processing, using the zero-knowledge proof module, the each service, to obtain the service processing result, the service processing result comprising a service processing confirmation indicating that the respective service is correctly processed.

3. The method according to claim 1 or 2, wherein the optimizing confidential data included in the service processing result of the each service, to obtain a block optimization result of the block comprises:
invoking a service aggregation process, and determining a zero-knowledge proof module corresponding to the service aggregation process;
optimizing, using the zero-knowledge proof module, the confidential data included in the service processing result of the each service, to obtain the block optimization result, the block optimization result comprising an optimization confirmation indicating that the confidential data of the N services is optimized.

4. The method according to any one of claims 1 to 3, wherein a first service node in the plurality of service nodes transmits a first service to the local consensus node, and
the method further comprises:
receiving the first service forwarded by the local consensus node.

5. The method according to any one of claims 1 to 3, further comprising:
receiving a second service transmitted by a second service node in the plurality of service nodes.

6. The method according to claim 5, further comprising:
returning the service processing result of the second service to the second service node.

7. The method according to claim 6, wherein the block optimization result comprises an optimized service processing result of the second service after optimizing the confidential data of the service processing result of the second service; and
the method further comprises:
returning the optimized service processing result of the second service to the second service node.

8. The method according to any one of claims 1 to 7, wherein the service processing node is in a data service network; and a data chain corresponding to the data service network is constructed based on service types of the N services; and
the method further comprises:
determining, in response to the block optimization result indicating that the each service is correctly processed, the block as a target block to be linked to the data chain; and
writing the target block into the data chain.

9. The method according to claim 8, wherein the data service network further comprises a data backup node; and
the method further comprises:
transmitting, in response to writing the target block into the data chain, the target block to the data backup node to back up the target block.

10. A method for processing data using a hierarchical blockchain network, the hierarchical blockchain network comprising a local consensus node, a service processing node, and a plurality of service nodes, the method being executable by the local consensus node and comprising:
receiving a notification message from a service processing node, the notification message comprising non-confidential data included in a service processing result of each of N services and a block optimization result of a block comprising the N services, the service processing node performing aggregation processing on the block to obtain the service processing result of the each service and optimizing confidential data included in the service processing result of the each service to obtain the block optimization result, N being a positive integer, the N services being transmitted from the plurality of service nodes and each having a pre-set confidentiality level; and
verifying the non-confidential data included in the service processing result of the each service and the block optimization result, to obtain a service verification result for the each service.

11. The method according to claim 10, wherein the plurality of service nodes comprises a first service node, and the method further comprises:
receiving a first service transmitted by the first service node, and forwarding the first service to the service processing node.

12. The method according to claim 11, wherein the block processing result comprises an optimized service processing result of the first service after optimizing the confidential data of the service processing result of the first service; and
the method further comprises:
returning the optimized service processing result to the first service node.

13. The method according to any one of claims 10 to 12, wherein the service processing result comprises a service processing confirmation indicating that the respective service is correctly processed, the block optimization result comprises an optimization confirmation indicating that the confidential data of the N services is optimized,
the verifying the non-confidential data included in the service processing result of the each service and the block optimization result comprises:
invoking a service aggregation process, and determining a verification contract corresponding to the service aggregation process, the verification contract comprising a first verification function and a second verification function;
invoking the first verification function to verify a hash value of the each service and the service processing confirmation;
invoking the second verification function to verify a hash value of the block processing result and the optimization confirmation.

14. The method according to any one of claims 10 to 13, wherein the service processing node is in a data service network; and a data chain corresponding to the data service network is constructed based on service types of the N services, and
the method further comprises:
determining, based on a blockhead of the block, a block height of the block in the data chain; and
updating a maximum block height of the data chain based on the block height of the block.

15. The method according to any one of claims 10 to 14, wherein the hierarchical blockchain network further comprises a global consensus node in a global consensus network, and the method further comprises:
determining, based on the service verification result, service information for the each service, and adding the service information into an information pool;
aggregating the service information recorded in the information pool within a preset duration, to obtain an aggregation service associated with the each service; and
transmitting, by using a cross-chain relay associated with the local consensus node, the aggregation service to the global consensus node, so that the global consensus node links the aggregation service to a global consensus chain maintained by the global consensus node.

16. The method according to any one of claims 10 to 15, wherein the hierarchical blockchain network further comprises a global consensus node in a global consensus network, and the method further comprises:
verifying a service aggregation process being registered in the global consensus network;
deploying, in a local consensus sub-chain, a verification contract corresponding to the service aggregation process, and authorizing the service processing node to start the service aggregation process to perform aggregation processing on the block and optimize confidential data included in the service processing result.

17. The method according to claim 16, further comprising:
receiving registration information from the global consensus node, wherein the registration information comprises a service identification of the service aggregation process and digest information of a zero-knowledge proof module corresponding to the service aggregation process; and
the verifying a service aggregation process being registered in the global consensus network, comprising:
using the registration information to verify the service aggregation process.

18. An apparatus for processing data using a hierarchical blockchain network, the hierarchical blockchain network comprising a local consensus node, a service processing node, and a plurality of service nodes,, the apparatus running on the service processing node, and the apparatus comprising:
a processing module, configured to perform aggregation processing on a block comprising N services, to obtain a service processing result for each of the N services, N being a positive integer, the N services being transmitted from the plurality of service nodes and each having a pre-set confidentiality level;
an optimization module, configured to optimize confidential data included in the service processing result of the each service, to obtain a block optimization result of the block;
a generating module, configured to generate a notification message, the notification message comprising the block optimization result and non-confidential data included in the service processing result of the each service; and
a transmitting module, configured to transmit the notification message to the local consensus node to verify the block optimization result and the non-confidential data included in the service processing result of the each service, to obtain a service verification result for the each service.

19. An apparatus for processing data using a hierarchical blockchain network, the hierarchical blockchain network comprising a local consensus node, a service processing node, and a plurality of service nodes, the apparatus running on the local consensus node, and the apparatus comprising:
a receiving module, configured to receive a notification message from a service processing node, the notification message comprising non-confidential data included in a service processing result of each of N services and a block optimization result of a block comprising the N services, the service processing node performing aggregation processing on the block to obtain the service processing result of the each service and optimizing confidential data included in the service processing result of the each service to obtain the block optimization result, N being a positive integer, the N services being transmitted from the plurality of service nodes and each having a pre-set confidentiality level; and
a verification module, configured to verify the block optimization result and the non-confidential data included in the service processing result of the each service, to obtain a service verification result for the each service.

20. A computer device, comprising a memory and a processor,
the memory being connected to the processor, the memory being configured to store a computer program, and the processor being configured to invoke the computer program, so that the computer device performs the method according to any one of claims 1 to 17.

21. A computer-readable storage medium, having a computer program stored therein, the computer program being loaded and executed by a processor, so that a computer device having the processor performs the method according to any one of claims 1 to 17.

22. A computer program product, comprising a computer program/instruction, the computer program/instruction, when executed by a processor, performing the method according to any of claims 1 to 17.
